# EUROPEAN PATENT APPLICATION

(11) **EP 4 697 849 A1**
(43) Date of publication of application: **18.02.2026**
(21) Application number: 24806340.6
(22) Date of filing: 28.04.2024
(51) Int. Cl.: H04W 76/11

(54) **COMMUNICATION METHOD, DEVICE AND SYSTEM**

(30) Priority: 12.05.2023 CN 202310541117
(71) Applicant: Huawei Technologies Co., Ltd., Shenzhen, Guangdong 518129 (CN)
(72) Inventor: CHEN, Zehao, Shenzhen, Guangdong 518129 (CN); LI, Yongcui, Shenzhen, Guangdong 518129 (CN)
(74) Representative: MERH-IP Matias Erny Reichl Hoffmann Patentanwälte PartG mbB
(86) International application number: PCT/CN2024/090352
(87) International publication number: WO 2024/234984

(57) **Abstract**

Embodiments of this application relate to the field of communication technologies, and provide a communication method, apparatus, and system, to select a better edge application server for a terminal when the terminal exits a terminal set. The method includes: A first network element determines that a first terminal is disassociated from a first terminal set. The first network element determines, based on the first terminal being disassociated from the first terminal set, to send a second data network access identifier of the first terminal to a second network element, or send first indication information to the first terminal, where the first indication information is related to reselecting an edge application server by the first terminal. In this solution, the first terminal may trigger edge application server migration after the first network element determines that the first terminal exits the first terminal set, to select a better edge application server for the first terminal. In this way, a delay of the first terminal is reduced and user experience is improved.

## Description

This application claims priority to Chinese Patent Application No. 202310541117.X, filed with the China National Intellectual Property Administration on May 12, 2023 and entitled "COMMUNICATION METHOD, APPARATUS, AND SYSTEM", which is incorporated herein by reference in its entirety.

### TECHNICAL FIELD

This application relates to the field of edge computing, and in particular, to a communication method, apparatus, and system.

### BACKGROUND

Edge computing (edge computing, EC) is proposed when an anchor gateway deployed in a centralized manner cannot meet a requirement of explosive growth of current mobile service traffic. Distributed service traffic is locally processed mainly by moving a user plane (user plane function, UPF) network element and a service processing capability to a network edge. In an EC deployment scenario, a plurality of edge application servers (edge application servers, EASs) may provide a service for a terminal. The plurality of EASs provide the same service and content, but the EASs have different internet protocol (internet protocol, IP) addresses. Therefore, when the terminal needs to access the service, the terminal needs to obtain an IP address of an EAS.

Currently, in a new EC scenario, for some specific services, a concept of a terminal set is introduced. In other words, a group of terminals may access a same EAS, where the EAS may be referred to as a common edge application server (common edge application server, common EAS); or the terminal set may access a same DNAI, where the DNAI may be referred to as a common data network access identifier (common data network access identifier, common DNAI). The terminal set is dynamic, in other words, a terminal may join or exit the terminal set at any time.

### SUMMARY

This application provides a communication method, apparatus, and system, to reselect an edge application server for a terminal when the terminal exits a terminal set.

To achieve the foregoing objective, embodiments of this application provide the following technical solutions.

According to a first aspect, an embodiment of this application provides a communication method, including: A first network element determines that a first terminal is disassociated from a first terminal set, where the first terminal set includes one or more terminals, and the one or more terminals access a first edge application server or a first data network access identifier. The first network element sends a second data network access identifier of the first terminal to a second network element, or sends first indication information to the first terminal.

For example, the first indication information is related to triggering edge application server re-discovery. For example, the first network element may be a session management network element, and the second network element may be an application network element.

According to the communication method provided in this embodiment of this application, in the method, when determining that the first terminal is disassociated from the first terminal set, the first network element sends the second data network access identifier of the first terminal to the second network element, or sends the first indication information to the first terminal, so that the second network element can be triggered to select, for the first terminal, an edge application server suitable for serving, or the first terminal can be triggered to perform edge application server re-discovery to select an edge application server suitable for serving. In this solution, edge application server migration may be triggered after the first terminal exits the first terminal set, to reselect an edge application server for the first terminal. In this way, a delay of the first terminal can be reduced and user experience can be improved.

In a possible implementation, the first indication information is used to clear cached edge application server information. Clearing may be described as refreshing.

In a possible implementation, the first indication information further indicates the first terminal to clear a domain name system cache, or the first network element sends, to the first terminal, indication information that indicates to clear a domain name system cache. In this way, the first terminal clears the domain name system cache based on the indication, and releases a domain name system memory.

In a possible implementation, the method provided in this embodiment of this application may further include: The first network element sends domain name system clearing indication information, where the domain name system clearing indication information indicates the first terminal to clear the domain name system cache. In this way, the first terminal clears the domain name system cache based on the indication, and releases the domain name system memory.

In a possible implementation, the first indication information includes a service identifier, and when the first indication information includes the service identifier, the first terminal clears a DNS cache related to the service identifier.

In a possible implementation, the service identifier may be a service data flow, an application identifier, a full qualified domain name, or the like.

In a possible implementation, the method provided in this embodiment of this application may further include: Before the first network element sends the second data network access identifier of the first terminal to the second network element or sends the first indication information to the first terminal, when the first network element determines that the first terminal is disassociated from the first terminal set, the first network element determines the second data network access identifier. For example, the second data network access identifier is used to determine an edge application server of the first terminal.

In a possible implementation, the method provided in this embodiment of this application may further include: The first terminal is disassociated from the first terminal set, the first edge application server or an edge application server corresponding to the first data network access identifier is not suitable for serving the first terminal, and the first network element determines the second data network access identifier. In this solution, when the first terminal is disassociated from the first terminal set and the first edge application server or the edge application server corresponding to the first data network access identifier is not suitable for serving the first terminal, a suitable edge application server may be reselected for the first terminal.

In a possible implementation, if the first network element determines that the first edge application server is suitable for serving the first terminal, the first network element determines that the second data network access identifier does not need to be sent to the second network element. If the first network element determines that the first edge application server is not suitable for serving the first terminal, the first network element sends the second data network access identifier to the second network element.

In a possible implementation, before the first network element determines that the first terminal is disassociated from the first terminal set, the method provided in this embodiment of this application may further include: The first network element receives second indication information. The first network element determines, based on the second indication information, that the first terminal is disassociated from the first terminal set. The first network element determines, by using the second indication information, that the first terminal is disassociated from the first terminal set. For example, the first network element may receive the second indication information from the second network element.

In a possible implementation, before the first network element determines that the first terminal is disassociated from the first terminal set, the method provided in this embodiment of this application may further include: The first network element receives a first message, where the first message includes an identifier of the first terminal set and third indication information, and the third indication information indicates that each terminal in the first terminal set needs to access the first edge application server or the first data network access identifier. The first network element receives a second message, where the second message does not include the identifier of the first terminal set and/or the third indication information; or the second message includes second indication information, and the second indication information indicates that the first terminal is disassociated from the first terminal set. Correspondingly, that the first network element determines that the first terminal is disassociated from the first terminal set includes: The first network element determines, based on the first message and the second message, that the first terminal is disassociated from the first terminal set. In this solution, the first network element may determine, by comparing the first message with the second message, that the first terminal is disassociated from the first terminal set.

In a possible implementation, the first message further includes a third identifier, and the third identifier is used to determine a service associated with the first terminal set.

In a possible implementation, the first message includes a PCC rule, and the PCC rule includes a traffic correlation identifier, and indication information of the first edge application server or indication information of the first data network access identifier.

In a possible implementation, the second message includes an updated PCC rule. The updated PCC rule does not include the traffic correlation identifier and/or the indication information of the first edge application server or the indication information of the first data network access identifier.

In a possible implementation, before the first network element determines that the first terminal is disassociated from the first terminal set, the method provided in this embodiment of this application may further include: The first network element receives identification information of the one or more terminals in the first terminal set and identification information of the first terminal. The first network element receives identification information of a terminal in an updated first terminal set. The identification information of the terminal in the updated first terminal set does not include the identification information of the first terminal. In this case, the first network element may determine, based on the identification information of the terminals in the first terminal set and the identification information of the terminal in the updated first terminal set, that the first terminal is disassociated from the first terminal set.

In a possible implementation, before the first network element sends the second data network access identifier of the first terminal to the second network element, the method provided in this embodiment of this application may further include: The first network element determines to send the second data network access identifier of the first terminal to the second network element.

In a possible implementation, the method provided in this embodiment of this application may further include: The first network element sends fourth indication information to the second network element. The fourth indication information indicates to select a second edge application server for the first terminal.

In a possible implementation, the method provided in this embodiment of this application may further include: The first network element receives edge application server address replacement information, where the edge application server address replacement information is used by the first terminal to connect to the second edge application server.

In a possible implementation, before the first network element sends the first indication information to the first terminal, the method provided in this embodiment of this application may further include: The first network element determines to send the first indication information to the first terminal. The first indication information may indicate the first terminal to perform edge application server re-discovery.

In a possible implementation, the second message received by the first network element includes an identifier of a second terminal set, and a plurality of terminals in the second terminal set need to access a third edge application server or a third data network access identifier.

According to a second aspect, an embodiment of this application provides a communication method, including: A second network element determines that a first terminal is disassociated from a first terminal set. The first terminal set includes one or more terminals that access a first edge application server or a first data network access identifier. The second network element determines a second edge application server corresponding to the first terminal, or sends edge application server re-discovery related indication information to a first network element, or sends edge application server relocation-related information to a first network element.

In the foregoing solution, when determining that the first terminal is disassociated from the first terminal set, the second network element may determine the second edge application server corresponding to the first terminal, or trigger the first network element to perform edge application server re-discovery, so that implementation logic of the first network element can be reduced.

In a possible implementation, before the second network element determines the second edge application server corresponding to the first terminal, or determines to send the edge application server relocation information to the first network element, the method provided in this embodiment of this application may further include: The second network element determines a second data network access identifier of the first terminal. Correspondingly, that the second network element determines the second edge application server corresponding to the first terminal includes: The second network element determines the second edge application server based on the second data network access identifier.

In a possible implementation, that the second network element determines the second data network access identifier of the first terminal includes: The second network element receives the second data network access identifier of the first terminal from the first network element. For example, the first network element may actively send the second data network access identifier of the first terminal to the second network element. Alternatively, the second network element sends a subscription message to the first network element in advance, where the subscription message is used by the first network element to provide the second data network access identifier of the first terminal.

In a possible implementation, that the second network element determines the second data network access identifier of the first terminal includes: The second network element requests the second data network access identifier of the first terminal from the first network element. The second network element receives the second data network access identifier from the first network element.

In a possible implementation, that the second network element requests the second data network access identifier of the first terminal from the first network element includes: The second network element sends fifth indication information to the first network element. The fifth indication information is used to request the second data network access identifier of the first terminal.

In a possible implementation, after the second network element determines the second edge application server corresponding to the first terminal, the method provided in this embodiment of this application may further include: The second network element sends address information of the second edge application server to the first network element. The address information of the second edge application server is used by the first terminal to connect to the second edge application server.

According to a third aspect, an embodiment of this application provides a communication method, including: A second network element receives a second data network access identifier of a first terminal from a first network element. The second network element reselects an edge application server for the first terminal based on the second data network access identifier.

In a possible implementation, the method provided in this embodiment of this application may further include: The second network element sends a member list of a first terminal set (including identification information of one or more terminals and identification information of the first terminal).

In a possible implementation, the method provided in this embodiment of this application may further include: The second network element determines that the first terminal is disassociated from the first terminal set.

In a possible implementation, the method provided in this embodiment of this application may further include: When determining that the first terminal is disassociated from the first terminal set, the second network element sends a member list of an updated first terminal set (including the identification information of the one or more terminals, but not including the identification information of the first terminal).

Optionally, the second network element may further send a service identifier, a traffic correlation identifier, and indication information of a first edge application server or indication information of a first data network access identifier.

For example, the second network element may send the member list of the first terminal set, the service identifier, the traffic correlation identifier, and the indication information of the first edge application server or the indication information of the first data network access identifier to a policy control network element (for example, a PCF network element). For example, the second network element determines that the first terminal is disassociated from the first terminal set, and the second network element may send the member list of the updated first terminal set, the service identifier, the traffic correlation identifier, and the indication information of the first edge application server or the indication information of the first data network access identifier to the policy control network element (for example, the PCF network element).

In a possible implementation, the method provided in this embodiment of this application may further include: The second network element sends edge application server address replacement information to the first network element.

According to a fourth aspect, an embodiment of this application provides a communication method, including: A first terminal receives first indication information from a first network element. The first terminal reselects an edge application server for the first terminal based on the first indication information.

In a possible implementation, the method provided in this embodiment of this application may further include: The first terminal clears a domain name system cache based on the first indication information.

In a possible implementation, the method provided in this embodiment of this application may further include: The first terminal receives, from the first network element, indication information for indicating to clear the domain name system cache. The first terminal clears the domain name system cache based on the indication information for indicating to clear the domain name system cache.

According to a fifth aspect, an embodiment of this application provides a communication method, including: A first network element receives a third message, where the third message is used by the first network element to determine to provide a second data network access identifier of a first terminal for a second network element. The first network element sends the second data network access identifier of the first terminal to the second network element.

For example, the third message may include fifth indication information. The fifth indication information is used to request the second data network access identifier of the first terminal. Alternatively, indication information included in the fifth message indicates that the first terminal is disassociated from a first terminal set.

In a possible implementation, the method provided in this embodiment of this application may further include: The first network element determines the second data network access identifier.

In a possible implementation, the method provided in this embodiment of this application may further include: The first network element receives edge application server address replacement information from the first network element.

In a possible implementation, the method provided in this embodiment of this application may further include: The first network element receives edge application server relocation-related information from the first network element.

Optionally, the first network element receives a service identifier from the first network element.

According to a sixth aspect, an embodiment of this application provides a communication apparatus. The communication apparatus may implement the method in any one of the first aspect or the possible implementations of the first aspect. Therefore, beneficial effects in any one of the first aspect or the possible implementations of the first aspect can also be achieved. The communication apparatus may be a first network element, or may be an apparatus that supports a first network element in implementing the method in any one of the first aspect or the possible implementations of the first aspect, for example, a chip used in the first network element. The communication apparatus may implement the foregoing method by software, hardware, or hardware executing corresponding software.

In an example, the communication apparatus may include a processing unit and a communication unit. The communication unit is configured to perform a receiving/sending related step performed by the first network element in any one of the first aspect or the possible implementations of the first aspect. The processing unit is configured to perform a processing related step performed by the first network element in any one of the first aspect or the possible implementations of the first aspect.

For example, when the communication apparatus is a chip or a chip system in the first network element, the processing unit may be a processor, and the communication unit may be a communication interface. For example, the communication interface may be an input/output interface, a pin, a circuit, or the like. The processing unit executes instructions stored in a storage unit, to enable the first network element to implement the communication method described in any one of the first aspect or the possible implementations of the first aspect. The storage unit may be a storage unit (for example, a register or a cache) in the chip, or may be a storage unit (for example, a read-only memory or a random access memory) that is in the first network element and that is outside the chip.

According to a seventh aspect, an embodiment of this application provides a communication apparatus. The communication apparatus may implement the method in any one of the second aspect or the possible implementations of the second aspect. Therefore, beneficial effects in any one of the second aspect or the possible implementations of the second aspect can also be achieved. The communication apparatus may be a second network element, or may be an apparatus that supports a second network element in implementing the method in any one of the second aspect or the possible implementations of the second aspect, for example, a chip used in the second network element. The communication apparatus may implement the foregoing method by software, hardware, or hardware executing corresponding software.

In an example, the communication apparatus may include a processing unit and a communication unit. The communication unit is configured to perform a receiving/sending related step performed by the second network element in any one of the second aspect or the possible implementations of the second aspect. The processing unit is configured to perform a processing related step performed by the second network element in any one of the second aspect or the possible implementations of the second aspect.

For example, when the communication apparatus is a chip or a chip system in the second network element, the processing unit may be a processor, and the communication unit may be a communication interface. For example, the communication interface may be an input/output interface, a pin, a circuit, or the like. The processing unit executes instructions stored in a storage unit, to enable the second network element to implement the communication method described in any one of the second aspect or the possible implementations of the second aspect. The storage unit may be a storage unit (for example, a register or a cache) in the chip, or may be a storage unit (for example, a read-only memory or a random access memory) that is in the second network element and that is outside the chip.

According to an eighth aspect, an embodiment of this application provides a communication apparatus. The communication apparatus may implement the method in any one of the third aspect or the possible implementations of the third aspect. Therefore, beneficial effects in any one of the third aspect or the possible implementations of the third aspect can also be achieved. The communication apparatus may be a third network element, or may be an apparatus that supports a third network element in implementing the method in any one of the third aspect or the possible implementations of the third aspect, for example, a chip used in the third network element. The communication apparatus may implement the foregoing method by software, hardware, or hardware executing corresponding software.

In an example, the communication apparatus may include a processing unit and a communication unit. The communication unit is configured to perform a receiving/sending related step performed by the third network element in any one of the third aspect or the possible implementations of the third aspect. The processing unit is configured to perform a processing related step performed by the third network element in the third aspect or the possible implementations of the third aspect.

For example, when the communication apparatus is a chip or a chip system in the third network element, the processing unit may be a processor, and the communication unit may be a communication interface. For example, the communication interface may be an input/output interface, a pin, a circuit, or the like. The processing unit executes instructions stored in a storage unit, to enable the third network element to implement the communication method described in any one of the third aspect or the possible implementations of the third aspect. The storage unit may be a storage unit (for example, a register or a cache) in the chip, or may be a storage unit (for example, a read-only memory or a random access memory) that is in the third network element and that is outside the chip.

According to a ninth aspect, an embodiment of this application provides a communication apparatus. The communication apparatus may implement the method in any one of the fourth aspect or the possible implementations of the fourth aspect. Therefore, beneficial effects in any one of the fourth aspect or the possible implementations of the fourth aspect can also be achieved. The communication apparatus may be a first terminal, or may be an apparatus that supports a first terminal in implementing the method in any one of the fourth aspect or the possible implementations of the fourth aspect, for example, a chip used in the first terminal. The communication apparatus may implement the foregoing method by software, hardware, or hardware executing corresponding software.

In an example, the communication apparatus may include a processing unit and a communication unit. The communication unit is configured to perform a receiving/sending related step performed by the first terminal in any one of the fourth aspect or the possible implementations of the fourth aspect. The processing unit is configured to perform a processing related step performed by the first terminal in any one of the fourth aspect or the possible implementations of the fourth aspect.

For example, when the communication apparatus is a chip or a chip system in the first terminal, the processing unit may be a processor, and the communication unit may be a communication interface. For example, the communication interface may be an input/output interface, a pin, a circuit, or the like. The processing unit executes instructions stored in a storage unit, to enable the first terminal to implement the communication method described in any one of the fourth aspect or the possible implementations of the fourth aspect. The storage unit may be a storage unit (for example, a register or a cache) in the chip, or may be a storage unit (for example, a read-only memory or a random access memory) that is in the first terminal and that is outside the chip.

According to a tenth aspect, an embodiment of this application provides a communication apparatus. The communication apparatus may implement the method in any one of the fifth aspect or the possible implementations of the fifth aspect. Therefore, beneficial effects in any one of the fifth aspect or the possible implementations of the fifth aspect can also be achieved. The communication apparatus may be a first network element, or may be an apparatus that supports a first network element in implementing the method in any one of the fifth aspect or the possible implementations of the fifth aspect, for example, a chip used in the first network element. The communication apparatus may implement the foregoing method by software, hardware, or hardware executing corresponding software.

In an example, the communication apparatus may include a processing unit and a communication unit. The communication unit is configured to perform a receiving/sending related step performed by the first network element in any one of the fifth aspect or the possible implementations of the fifth aspect. The processing unit is configured to perform a processing related step performed by the first network element in the fifth aspect or the possible implementations of the fifth aspect.

For example, when the communication apparatus is a chip or a chip system in the first network element, the processing unit may be a processor, and the communication unit may be a communication interface. For example, the communication interface may be an input/output interface, a pin, a circuit, or the like. The processing unit executes instructions stored in a storage unit, to enable the first network element to implement the communication method described in any one of the fifth aspect or the possible implementations of the fifth aspect. The storage unit may be a storage unit (for example, a register or a cache) in the chip, or may be a storage unit (for example, a read-only memory or a random access memory) that is in the first network element and that is outside the chip.

According to an eleventh aspect, this application provides a first network element, including a processor, where the processor is connected to a memory. The processor reads instructions stored in the memory, to enable the first network element to perform the method in any one of the first aspect or the optional designs of the first aspect. The first network element may further include the memory. Optionally, the first network element may further include a communication interface.

According to a twelfth aspect, this application provides a second network element, including a processor, where the processor is connected to a memory. The processor reads instructions stored in the memory, to enable the second network element to perform the method in any one of the second aspect or the optional designs of the second aspect. The second network element may further include the memory. Optionally, the second network element may further include a communication interface.

According to a thirteenth aspect, this application provides a communication system, including a first network element and a target device, and the target device is a first terminal or a second network element. The first network element performs the method in any one of the first aspect or the possible implementations of the first aspect, the second network element performs the method in any one of the third aspect or the possible implementations of the third aspect, and the first terminal performs the method in any one of the fourth aspect or the possible implementations of the fourth aspect.

According to a fourteenth aspect, this application provides a communication system, including a second network element and a first network element. The second network element performs the method in any one of the second aspect or the possible implementations of the second aspect, and the first network element performs the method in any one of the fifth aspect or the possible implementations of the fifth aspect.

According to a fifteenth aspect, this application provides a computer-readable storage medium, including computer-readable instructions. When the instructions are run on a computer, the computer is enabled to perform the method in any one of the first aspect or the possible implementations of the first aspect.

According to a sixteenth aspect, this application provides a computer-readable storage medium, including computer-readable instructions. When the instructions are run on a computer, the computer is enabled to perform the method in any one of the second aspect or the possible implementations of the second aspect.

According to a seventeenth aspect, this application provides a computer program product, including a computer program. When the program runs on a computer, the computer is enabled to perform the method in any one of the first aspect or the possible implementations of the first aspect.

According to an eighteenth aspect, this application provides a computer program product, including a computer program. When the program runs on a computer, the computer is enabled to perform the method in any one of the second aspect or the possible implementations of the second aspect.

According to a nineteenth aspect, this application provides a chip, used in a first network element. The chip includes at least one processor and a communication interface. The communication interface is coupled to the at least one processor. The processor is configured to run a computer program or instructions, to perform the method in any one of the first aspect or the possible implementations of the first aspect. The communication interface is configured to communicate with another module outside the chip.

According to a twentieth aspect, this application provides a chip, used in a second network element. The chip includes at least one processor and a communication interface. The communication interface is coupled to the at least one processor. The processor is configured to run a computer program or instructions, to perform the method in any one of the second aspect or the possible implementations of the second aspect. The communication interface is configured to communicate with another module outside the chip.

### BRIEF DESCRIPTION OF DRAWINGS

FIG. 1 is a diagram of an architecture of a communication system according to an embodiment of this application;
FIG. 2 is a diagram of a 5G network architecture according to an embodiment of this application;
FIG. 3 is a schematic flowchart of accessing an edge application server by a terminal according to an embodiment of this application;
FIG. 4 is a flowchart of a communication method according to an embodiment of this application;
FIG. 5 is a flowchart of another communication method according to an embodiment of this application;
FIG. 6 is a first schematic flowchart of a communication method according to an embodiment of this application;
FIG. 7 is a second schematic flowchart of a communication method according to an embodiment of this application;
FIG. 8 is a third schematic flowchart of a communication method according to an embodiment of this application;
FIG. 9 is a fourth schematic flowchart of a communication method according to an embodiment of this application;
FIG. 10 is a diagram of a structure of a communication apparatus according to an embodiment of this application;
FIG. 11 is a diagram of a hardware structure according to an embodiment of this application; and
FIG. 12 is a diagram of a structure of a chip according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, first indication information and second indication information are merely used to distinguish between different indication information, and do not limit sequences of the first indication information and the second indication information. A person skilled in the art may understand that the terms such as "first" and "second" do not limit a quantity or an execution sequence, and the terms such as "first" and "second" do not indicate a definite difference.

It should be noted that, in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a relative concept in a specific manner.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems. In embodiments of this application, an example in which the provided method is applied to an NR system or a 5th generation mobile communication technology (5th generation mobile networks or 5th generation wireless systems, 5th-Generation, 5G) network is used for description.

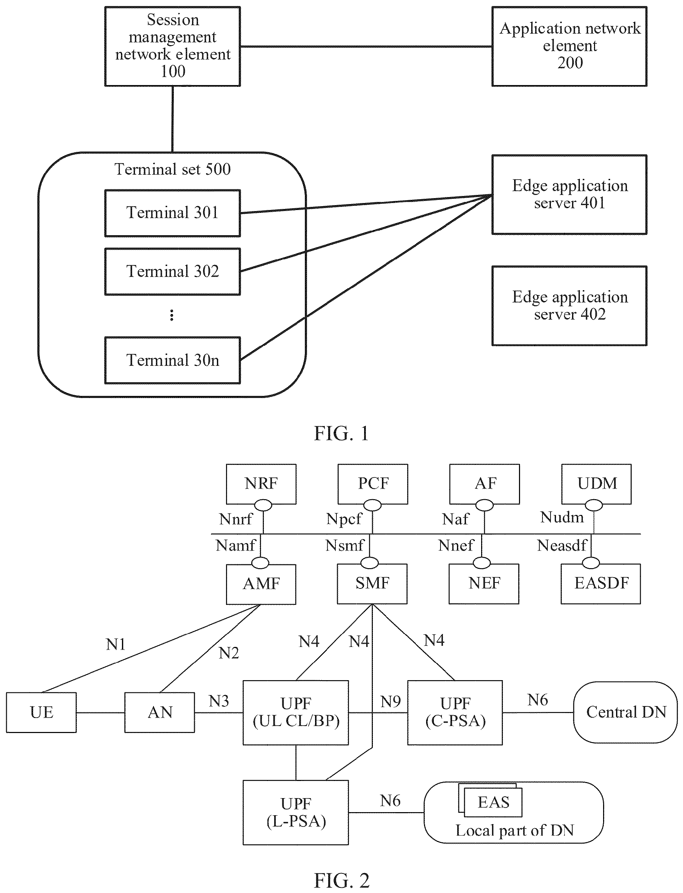

FIG. 1 is a diagram of an architecture of a communication system according to an embodiment of this application. The system includes a session management network element 100, an application network element 200, one or more terminals (such as a terminal 301, a terminal 302, ..., and a terminal 30n), and one or more edge application servers (such as an edge application server 401 and an edge application server 402).

One or more services are deployed on each edge application server, and a terminal may access a service deployed on the edge application server. It is clear that the terminal may also receive a service data flow sent by the edge application server. For example, various services, such as a game service, a session service, and a multimedia service, may be deployed on the edge application server.

The application network element 200 is configured to interact with the session management network element 100, to provide a service, information, and the like.

Optionally, as shown in FIG. 1, when a plurality of terminals need to access a service deployed on a same edge application server, the plurality of terminals may be grouped into a terminal set 500, and the plurality of terminals access the same edge application server (for example, the edge application server 401). For example, the edge application server 401 may be referred to as a common (common) EAS. It may be understood that the common EAS is an edge application server corresponding to the terminal set 500. Alternatively, a same DNAI is accessed, where the DNAI may be referred to as a common DNAI.

A member that is of the terminal set 500 and that needs to access the edge application server 401 is constrained by a set or a list (UE list) of identifiers of the terminals in the terminal set 500, is constrained by a set identifier (group ID), or is constrained by identifiers of all the terminals (any UE ID).

Optionally, a spatial validity condition (spatial validity condition) may be used to further constrain the terminal set 500. Specifically, if a terminal 300 is in the UE list/group ID/any UE ID and a location is in a location range identified by the spatial validity condition, the terminal 300 belongs to the terminal set 500.

The communication system shown in FIG. 1 may be applied to a 5th generation (5th generation, 5G) network architecture shown in FIG. 2. It is clear that the communication system may also be applied to a future network architecture, for example, a 6th generation (6th generation, 6G) network architecture. This is not limited in this application.

For example, the communication system shown in FIG. 1 is applied to the 5G network architecture. FIG. 2 is a diagram of a 5G network architecture based on a point-to-point interface. A network element or an entity corresponding to the session management network element 100 in FIG. 1 may be a session management function (session management function, SMF) network element in the 5G network architecture shown in FIG. 2. A network element or an entity corresponding to the application network element 200 in FIG. 1 may be an application function (Application Function, AF) network element in the 5G network architecture shown in FIG. 2. A network element or an entity corresponding to the terminal 300 in FIG. 1 may be a user equipment (user equipment, UE) in the 5G network architecture shown in FIG. 2.

In addition, as shown in FIG. 2, the 5G network architecture may further include a network repository function (network repository function, NRF) network element, a policy control function (policy control function, PCF) network element, an access and mobility management function (access and mobility management function, AMF) network element, a network exposure function (network exposure function, NEF) network element, a unified data management function (unified data function, UDM) network element, an edge application server discovery function (edge application server discovery function, EASDF) network element, an access network (access network, AN), a user plane function (user plane function, UPF) network element, a data network (data network, DN), an edge application server (edge application server, EAS), and the like. This is not specifically limited in embodiments of this application.

The following describes functions of the network elements.

The NRF network element may be configured to provide a network element discovery function, and provide, based on a request of another network element, network element information corresponding to a network element type. The NRF network element further provides network element management services, for example, network element registration, update, and deregistration, and network element status subscription and push.

The PCF network element is mainly responsible for supporting a unified policy to govern network behavior, and providing a policy rule for a control plane function for execution, and mainly obtains subscription-related information from the unified data repository (unified data repository, UDR) network element for a policy decision. The UDR provides a capability of storing subscription data, policy data, and capability exposure-related data.

The AF network element is mainly responsible for interacting with a core network to provide services, for example, affecting traffic routing, accessing network capability exposure, interacting with a policy decision network element for policy control, and providing information for the core network.

The AF network element may be a third-party function entity, or may be an operator-deployed application service, for example, an IP multimedia subsystem (IP Multimedia Subsystem, IMS) voice call service. The AF network element may also be referred to as an application server.

The UDM network element is mainly responsible for subscription management, access authorization, authentication information generation, and the like for a user.

The AMF network element mainly performs functions such as mobility management and access authentication or access authorization. In addition, the AMF network element is further responsible for transfer of a user policy between a terminal and the PCF network element. The SMF network element is mainly responsible for session management in the network architecture, and functions mainly include session establishment, modification, and release, and the like. For example, the session management network element allocates an IP address to the terminal, or selects a UPF that provides a packet forwarding function.

The SMF network element mainly performs functions such as session management, execution of a control policy delivered by the PCF network element, selection of a UPF network element, and allocation of the internet protocol (internet protocol, IP) address of the terminal.

The NEF network element is mainly configured for supporting exposure of capabilities and events.

The EASDF network element is a network element that is mainly responsible for assisting EAS discovery, and is mainly configured to process a domain name system (domain name system, DNS) message based on an indication of the SMF, where the processing includes: reporting the DNS message to the SMF, adding an extension mechanisms for DNS client subnet option (edns client subnet option, EDNS) to a DNS cache, forwarding the DNS cache to a DNS server, and forwarding a DNS reply to the UE.

The UPF network element is used as an interface to the data network, and implements functions such as user plane data forwarding, session/flow level charging statistics collection, and bandwidth limitation. Refer to the network architecture shown in FIG. 2. UPFs that are directly connected to DNs are referred to as protocol data unit session anchors (protocol data unit session anchors, PSAs), where a central session anchor (central PDU session anchor, C-PSA for short) is connected to a central data network, and a local session anchor (Local PDU session anchor, L-PSA) is connected to a local data network. A UPF network element that is not connected to a DN is an uplink classifier (uplink classifier, UL CL) UPF anchor or a branching point (branching point, BP) UPF anchor.

The DN is a network located outside an operator network. The operator network may access a plurality of DNs, and a plurality of services may be deployed on the DN, to provide services such as data and/or voice for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company. DNs are classified into a central data network (central DN) and a local data network (local part of DN). As shown in FIG. 2, the local data network includes a plurality of EASs.

In FIG. 2, a terminal accesses a network via an AN device, and the terminal communicates with the AMF network element through an N1 interface (N1 for short). The SMF network element communicates with one or more UPF network elements through an N4 interface (N4 for short). The UPF network element communicates with the DN through an N6 interface (N6 for short). The AN device communicates with the AMF network element through an N2 interface (N2 for short). The AN device communicates with the UPF network element through an N3 interface (N3 for short). UPF network elements communicate with each other through an N9 interface (N9 for short).

Control plane network elements may also interact with each other through a service-based interface. For example, as shown in FIG. 2, the AMF network element, the SMF network element, the UDM network element, or the PCF network element interact with each other through a service-based interface. For example, a service-based interface exhibited by the AMF network element may be Namf. A service-based interface exhibited by the SMF network element may be Nsmf. A service-based interface exhibited by the UDM network element may be Nudm. A service-based interface exhibited by the PCF network element may be Npcf. A service-based interface exhibited by the NEF network element may be Nnef. A service-based interface exhibited by the AF network element may be Naf. A service-based interface exhibited by the NRF network element may be Nnrf. It should be understood that, for related descriptions of names of various service-based interfaces, refer to a diagram of a 5G system architecture (5G system architecture) in a conventional technology. Details are not described herein.

It should be noted that FIG. 2 merely provides an example of one SMF network element. It is clear that FIG. 2 may include a plurality of SMF network elements, for example, include an SMF network element 1 and an SMF network element 2. This is not specifically limited in this embodiment of this application.

It should be noted that the AN device, the AMF network element, the SMF network element, the UDM network element, the UPF network element, the PCF network element, and the like in FIG. 2 are merely names, and the names do not constitute any limitation on the devices. In a 5G network and another future network, network elements or entities corresponding to the AN device, the AMF network element, the SMF network element, the UDM network element, the UPF network element, and the PCF network element may alternatively have other names. This is not specifically limited in embodiments of this application. For example, the UDM network element may alternatively be replaced with a home subscriber server (home subscriber server, HSS), a user subscription database (user subscription database, USD), a database entity, or the like. This is uniformly described herein, and details are not described subsequently.

In FIG. 2, Nausf, Nnef, Npcf, Nudm, Naf, Namf, Nsmf, N1, N2, N3, N4, and N6 are interface sequence numbers. For meanings of the interface sequence numbers, refer to meanings defined in the 3GPP standard protocol. This is not limited herein.

It may be understood that the foregoing network element or function may be a network element in a hardware device, a software function running on dedicated hardware, or a virtualized function instantiated on a platform (for example, a cloud platform).

Optionally, the network element or function may be implemented by one device, may be jointly implemented by a plurality of devices, or may be a functional module in one device. This is not specifically limited in embodiments of this application. The session management network element 100 and the application network element 200 in this application may be respectively the SMF network element and the AF network element in FIG. 2, or may be network elements that have functions of the SMF network element and the AF network element in a future communication network such as a 6G network. This is not limited in this application. For ease of description, an example in which the session management network element 100 and the application network element 200 are respectively the SMF network element and the AF network element is used for description in this application.

The user equipment (user equipment, UE) is a device that allows the user to access a network service. In the 3GPP standard, an interface between the user equipment and the network is a wireless interface.

The UE may include various handheld devices, vehicle-mounted devices, wearable devices, and computing devices that have a wireless communication function, or another processing device connected to a wireless modem. The UE may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a user equipment (user equipment, UE), a mobile station (mobile station, MS), a terminal device (terminal device), a relay user equipment, or the like. The relay user equipment may be, for example, a 5G residential gateway (residential gateway, RG). For ease of description, in this application, the user equipments mentioned above are collectively referred to as terminals.

It should be understood that, the terminal in embodiments of this application may alternatively be a terminal device in an internet of things or a terminal in a plurality of vertical industry application fields such as a port, an intelligent factory, railway transportation, logistics, an uncrewed aerial vehicle, and a driverless car, for example, a mobile robot (mobile robot), an automated guided vehicle (automated guided vehicle, AGV), a driverless car, a control device and a sensor on a train, or a control device and a sensor (sensor) deployed in a factory.

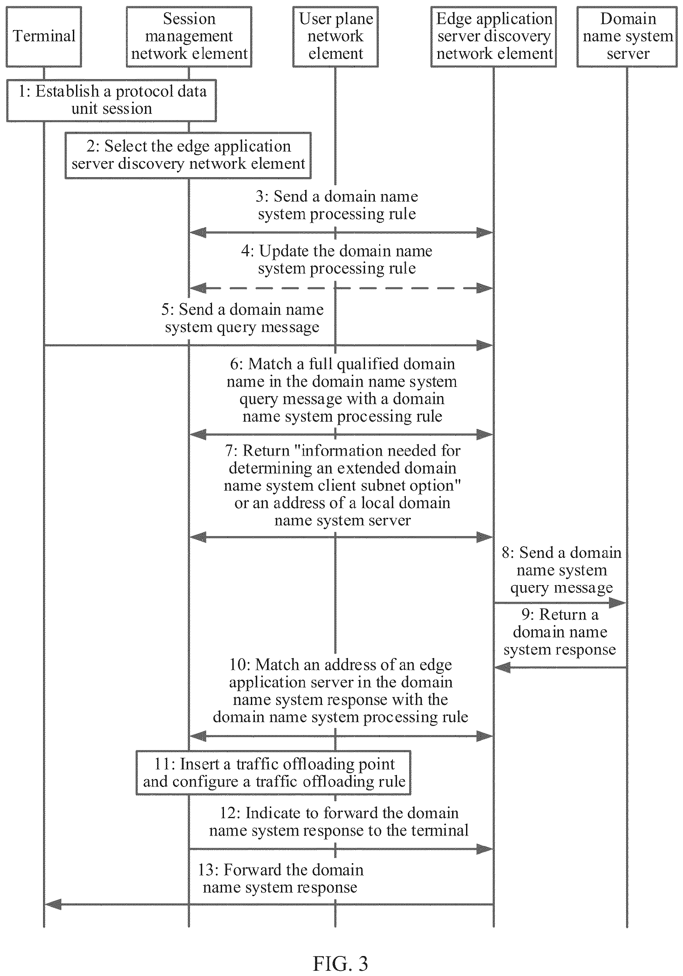

In some related technologies, when a terminal needs to access a service, in an edge computing (edge computing, EC) scenario, the terminal is required to access an EAS that is closest to the terminal and that can provide the service, and provide an internet protocol (internet protocol, IP) address of the EAS. After obtaining the IP address of the EAS, the terminal accesses the EAS. FIG. 3 is a schematic flowchart of accessing an edge application server by a terminal. With reference to the network architecture shown in FIG. 2, specific steps are as follows:
Step 1: The terminal first establishes a protocol data unit (protocol data unit, PDU) session. It should be noted that the following step 2 and step 3 are performed in a PDU session establishment procedure.
Step 2: The SMF network element selects the EASDF network element.
Step 3: The SMF network element sends a domain name system (domain name system, DNS) processing rule to the EASDF network element, where the DNS processing rule is used by the EASDF network element to process a DNS message.
Step 4: The SMF network element may update the DNS processing rule based on a change of a deployment status of the EAS or another reason (for example, a change of an address of the EAS), for example, resend a new address of the EASDF network element or a new location of the EASDF network element.
Step 5: The terminal sends a DNS query message to the EASDF network element, where the DNS query message includes a full qualified domain name (full qualified domain name, FQDN).
Step 6: The EASDF network element matches the FQDN in the DNS query message with a DNS processing rule; and if the FQDN matches a location of the EAS, it indicates that the matching succeeds, and the EASDF network element reports the FQDN to the SMF network element.
Step 7: The SMF network element returns "information needed for determining an EDNS client subnet option" or an address of a local DNS server to the EASDF network element based on the FQDN and a location of the terminal.
Step 8: The EASDF network element sends the DNS query message to a DNS, where the EASDF network element determines the EDNS client subnet option based on the "information needed for determining the EDNS client subnet option", adds the EDNS client subnet option to the DNS query message, and forwards the DNS query message to a central DNS server, or the EASDF network element forwards the DNS query message to the local DNS server.
Step 9: The DNS server returns a DNS response to the EASDF network element, where the DNS response includes an IP address of the EAS.
Step 10: The EASDF network element matches the IP of the EAS in the DNS response with the DNS processing rule; and if the matching succeeds, caches the DNS response and reports the IP of the EAS to the SMF network element.
Step 11: The SMF network element inserts a traffic offloading point based on the IP of the EAS, and configures a traffic offloading rule.
Step 12: The SMF network element indicates the EASDF network element to forward the DNS response to the terminal.
Step 13: The EASDF network element forwards the DNS response to the terminal.

When the terminal moves, for example, a distance between the terminal and the EAS becomes longer, or the EAS currently accessed by the terminal is overloaded, the EAS may be unsuitable for providing a service for the terminal. In this case, a network element in a core network perceives the movement of the terminal, or may determine, based on load balancing, to trigger EAS re-discovery. For example, the SMF network element sends a PDU session modification instruction to the terminal based on a change of a data network access identifier (data network access identifier, DNAI) of the terminal or a change of a local session anchor (Local PDU session anchor, L-PSA), where the PDU session modification instruction includes EAS re-discovery indication information. The PDU session modification instruction may further include a scope (for example, a full qualified domain name (full qualified domain name, FQDN) that is in a domain name system (domain name system, DNS) cache and that needs to be cleared). After receiving the PDU session modification instruction, the terminal clears the DNS cache. If the PDU session modification instruction includes the scope, the terminal clears only a DNS cache related to the scope (for example, the FQDN).

In some other related technologies, after a terminal moves, the terminal accesses an EAS again, where an EAS accessed by the terminal before moving is referred to as a source EAS, and the EAS that is accessed after the migration is referred to as a target EAS. Specifically, an EAS IP replacement method is used for implementation: When the terminal moves, an SMF network element is triggered to send a DNAI to an AF network element, and the AF network element selects the target EAS based on the DNAI; or the AF network element determines, based on load balancing, to select the target EAS. After selecting the target EAS, the AF network element copies, to the target EAS, a context (for example, a role status in an ongoing game and progress of a video that is being watched) of the terminal running on the source EAS. Then, the AF network element sends EAS IP replacement information to the SMF network element, where the EAS IP replacement information includes an IP address and a port number of the source EAS and an IP address and a port number of the target EAS. After receiving the EAS IP replacement information, the SMF network element correspondingly configures an L-PSA, and then the L-PSA performs EAS IP replacement based on an indication of the SMF network element.

Currently, in some EC scenarios, terminals in a terminal set need to access a same EAS (which may be referred to as a common EAS) or a same DNAI (which may be referred to as a common DNAI). However, each terminal in the terminal set is dynamic, and it may be understood as that a terminal may join or exit the terminal set at any time. However, a terminal (for example, a terminal A) may exit the terminal set because when the terminal A accesses the common EAS or the common DNAI, the common EAS or an EAS corresponding to the common DNAI is not suitable for serving the terminal A, for example, the common EAS is far away from the terminal A. An EAS or a DNAI being "not suitable for serving the terminal A" herein may mean that the EAS or the DNAI is far away from a current location of the terminal A, does not correspond to a DNAI of the terminal A, or has high load, a UPF corresponding to the EAS or the DNAI is different from a UPF corresponding to a location of the UE, or an EAS or a DNAI that is closer to a current location of the terminal A or that has lower load exists. When the terminal A exits, the terminal A loses a constraint of the common EAS or the common DNAI, and the terminal A may select a better EAS. In this way, a delay of the terminal A can be reduced and user experience can be improved. However, in the conventional technology, there is no edge migration solution used after the terminal exits the terminal set.

It should be noted that, that the terminal exits the terminal set means that the terminal changes from a state belonging to the terminal set to a state not belonging to the terminal set, or the terminal no longer needs to access the common EAS or the common DNAI with another terminal in the terminal set. That the terminal exits the terminal set may refer to a moment at which the state changes, may refer to the state after the change, or may refer to a change event of the state. After the terminal exits the terminal set, the terminal may not belong to any terminal set, or may join another terminal set. This is not limited in this application. That the terminal exits the terminal set may be described as the following: The terminal is disassociated from the terminal set, the terminal no longer belongs to the terminal set, or the terminal no longer needs to access the (current/original) common EAS/common DNAI. It should be noted that access to a data network access identifier may refer to access to a data network identified by the data network access identifier, or access to a service over a data network or a user plane identified by the access data network access identifier.

Based on this, an embodiment of this application provides a communication method. In the method, the EAS re-discovery indication information is triggered based on a terminal exiting a terminal set, so that when a terminal exits the terminal set, an EAS suitable for serving the terminal is selected through EAS re-discovery.

In embodiments of this application, a specific structure of an entity for performing the communication method is not specially limited in embodiments of this application, provided that the entity can run a program that records code for performing the communication method in embodiments of this application, to perform communication according to the communication method in embodiments of this application. For example, a communication method provided in an embodiment of this application may be performed by a functional module that can invoke and perform a program and that is in a first network element, or a communication apparatus used in a first network element, for example, a chip, a chip system, or an integrated circuit. The chip, the chip system, or the integrated circuit may be disposed inside the first network element, or may be independent of the first network element. This is not limited in embodiments of this application.

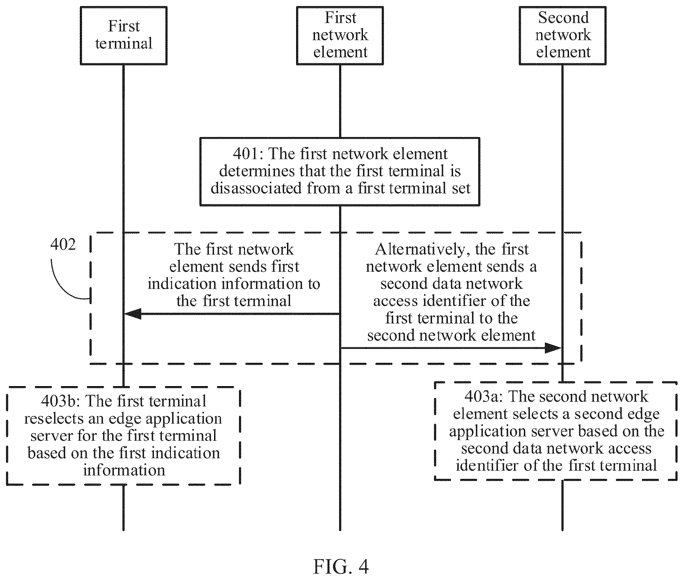

Refer to FIG. 4. An embodiment of this application provides a communication method. The method includes the following steps.

Step 401: A first network element determines that a first terminal is disassociated from a first terminal set.

For example, the first terminal set includes one or more terminals, and the one or more terminals access a first edge application server or a first data network access identifier. It may be understood that before the first terminal is disassociated from the first terminal set, the first terminal set includes the one or more terminals and the first terminal. After the first terminal is disassociated from the first terminal set, the first terminal set includes the one or more terminals.

For example, that the first terminal is disassociated from the first terminal set may also be referred to as that the first terminal exits the first terminal set. That the first terminal is disassociated from the first terminal set may be understood as follows: The first terminal no longer needs to access a same EAS (for example, the first edge application server) or a same DNAI (for example, the first data network access identifier) with another terminal in the first terminal set. A disassociation process is a state change in which the first terminal changes from belonging to the first terminal set to no longer belonging to the first terminal set. The first terminal set in embodiments of this application may also be referred to as a first terminal group.

It may be understood that before the first terminal is disassociated from the first terminal set, the first terminal belongs to the first terminal set, in other words, the first terminal and the another terminal in the first terminal set access a common EAS (namely, the first edge application server) or a common DNAI (namely, the first data network access identifier).

For example, the common EAS may provide one or more services. Before the first terminal is disassociated from the first terminal set, the first terminal and the another terminal in the first terminal set access the common EAS to access the service provided by the common EAS.

With reference to FIG. 1, the first network element in embodiments of this application may be the session management network element 100 shown in FIG. 1. The first terminal may be any terminal shown in FIG. 1. The first terminal set may be the terminal set 500 shown in FIG. 1. The first edge application server in embodiments of this application may be the edge application server 401 accessed by the plurality of terminals shown in FIG. 1.

For example, the first edge application server is the common EAS, and the service deployed on the common EAS is a game A. The game A is an online game. In an online mode, each room in the game may support a maximum of 10 users to perform online interaction. When 10 users in a room 1 play the game, terminals corresponding to the users belong to the first terminal set, where the first terminal is included. In this case, the 10 terminals in the room 1 access the common EAS. When a user corresponding to the first terminal exits the room 1, for example, the user may start to play in a single-player mode, or join another game room, or the user exits the game A, the first terminal no longer needs to access the same EAS as the other users in the room 1, that is, no longer needs to access the common EAS. In this case, the first terminal is disassociated from the first terminal set.

In this embodiment of this application, for a specific process in which any terminal in the first terminal set accesses the common EAS or the common DNAI, refer to the embodiment shown in FIG. 3. Details are not described herein again.

In an example, the first network element is an SMF network element. That the plurality of terminals in the first terminal set access the common EAS specifically includes: The SMF network element receives a policy and charging control (policy and charging control, PCC) rule, where the PCC rule is generated by using a traffic correlation identifier (Traffic Correlation ID), a service identifier, and indication information of the common EAS. The traffic correlation ID is an identifier of the first terminal set, the service identifier indicates that the terminals in the first terminal set need to access a same data network access identifier when accessing a service, and the indication information of the common EAS indicates that the terminals in the first terminal set need to access a same data network access identifier. The SMF network element determines the traffic correlation ID of the first terminal set. If the first terminal set already has a common EAS that can be accessed, the SMF network element sends an identifier (for example, an address) of the common EAS to an EASDF network element. Optionally, the SMF network element may further indicate the EASDF network element to return a DNS response including the address of the common EAS to the terminal. If the first terminal set does not have a common EAS that can be accessed, the SMF network element needs to first determine a common EAS corresponding to the first terminal set. For example, when the SMF network element may receive an address of an EAS from the EASDF network element, the SMF network element uses the EAS provided by the EASDF network element as the common EAS.

The service identifier may be a service data flow (service data flow, SDF), an application identifier (application identifier, App ID), a full qualified domain name (full qualified domain name, FQDN), or the like.

In another example, the first network element is an SMF network element. That the one or more terminals in the first terminal set access the common DNAI specifically includes: The SMF network element receives a PCC rule, where the PCC rule includes a traffic correlation ID, a service identifier, and indication information of the common DNAI. The indication information of the common DNAI indicates that the terminals in the first terminal set need to access a same data network access identifier. When determining that an FQDN reported by an EASDF network element matches the service identifier in the PCC rule, and he FQDN and/or the service identifier have/has a corresponding common DNAI, the SMF network element determines that the terminal needs to access a common DNAI corresponding to the first terminal set. If the first terminal set already has the corresponding common DNAI, the SMF network element determines an EDNS client subnet option or an address of a local DNS server based on the common DNAI, and sends, to the EASDF network element, the EDNS client subnet option corresponding to the common DNAI or the address that is of the local DNS server and that corresponds to the common DNAI. If the first terminal set does not have a corresponding common DNAI, the SMF network element first determines a common DNAI, then determines an EDNS client subnet option or an address of a local DNS server, and sends, to the EASDF network element, the EDNS client subnet option corresponding to the common DNAI or the address that is of the local DNS server and that corresponds to the common DNAI.

Step 402: The first network element sends a second data network access identifier of the first terminal to a second network element, or sends first indication information to the first terminal. Correspondingly, the second network element receives the second data network access identifier of the first terminal from the first network element, or the first terminal receives the first indication information from the first network element.

For example, the first indication information is used to trigger edge application server reselection for the first terminal. For example, the first indication information is related to edge application server re-discovery. For example, the first indication information is edge application server re-discovery-related indication information.

The second data network access identifier represents a current location of the first terminal. When the first terminal does not exit the first terminal set, a data network access identifier corresponding to the common EAS or the common DNAI accessed by the first terminal set is a result of compromise by the plurality of terminals in the first terminal set. Therefore, the DNAI is not necessarily the most suitable for the first terminal. After the first terminal exits the first terminal set, the first terminal may freely select an edge application server to be accessed.

In an example, the first indication information may be carried in a PDU session modification/update instruction. For example, the first indication information is edge application server re-discovery indication information.

Optionally, the first indication information may alternatively be sent to the first terminal together with the service identifier; or the PDU session modification/update instruction may further include the service identifier, to indicate that the first terminal needs to perform EAS re-discovery when accessing a service indicated by the service identifier, or to indicate the first terminal to clear or refresh (refresh) cached edge application server information (for example, a DNS cache).

For example, the first network element is the SMF network element. When the SMF network element determines that the first terminal is disassociated from the first terminal set, the SMF network element sends the PDU session modification/update instruction to the first terminal.

Step 403a: The second network element selects a second edge application server based on the second data network access identifier of the first terminal. The second edge application server is an edge application server suitable for serving the first terminal.

Step 403b: The first terminal reselects an edge application server for the first terminal based on the first indication information.

For example, for a specific implementation of step 403b, refer to the embodiment shown in FIG. 3. Details are not described herein again.

In the foregoing communication method, the first network element determines that the first terminal is disassociated from the first terminal set, and the first network element sends the second data network access identifier of the first terminal to the second network element, or sends the edge application server re-discovery-related indication information to the first terminal, so that the second network element is triggered to select, for the first terminal, the edge application server suitable for serving, or the first terminal is triggered to perform edge application server re-discovery to select the edge application server suitable for serving. In this solution, the first terminal may trigger edge application server migration after the first network element determines that the first terminal exits the first terminal set, to select a better edge application server for the first terminal. In this way, a delay of the first terminal can be reduced and user experience can be improved.

In some embodiments of this application, the first network element may further indicate the first terminal to clear the domain name system cache. For example, the first indication information further indicates the first terminal to clear the domain name system cache. For another example, in addition to sending the first indication information, the first network element may further send domain name system clearing indication information, where the domain name system clearing indication information indicates the first terminal to clear the domain name system cache, or is described as indicating the first terminal to clear or refresh the cached edge application server information.

The domain name system cache (domain name system cache, DNS cache) means that after querying a DNS, the first terminal stores a query result (for example, an IP address of a DNS server) for a period of time, and the storage information is referred to as the DNS cache. The storage time is referred to as time to live (time to live, TTL).

For example, when the TTL of the DNS cache has not expired, if the first terminal needs to access a service of an FQDN corresponding to the DNS cache whose TTL has not expired, the first terminal directly uses the DNS cache as the query result; or the first terminal does not query a DNS, but accesses an IP address corresponding to the corresponding DNS cache. When the edge application server re-discovery related indication information includes a scope (for example, the FQDN), the first terminal clears only a DNS cache related to the scope.

Optionally, when the first indication information includes the service identifier, the first terminal clears a DNS cache related to the service identifier.

In some embodiments of this application, before the first network element sends the second data network access identifier of the first terminal to the second network element, or sends the first indication information to the first terminal, the communication method further includes: When the first network element determines that the first terminal is disassociated from the first terminal set, the first network element determines the second data network access identifier.

For example, the first network element is the SMF network element. The SMF network element may obtain the second data network access identifier from network elements such as an AMF network element and an LMF network element, or locally determine the second data network access identifier; or the SMF network element may determine, by determining a UPF network element, based on the UPF network element and a DN network element connected to the UPF network element, the second data network access identifier of the first terminal. This is not limited in this application.

In some embodiments of this application, when the first network element determines the second data network access identifier, the communication method further includes: The first network element determines that the first edge application server is not suitable for serving the first terminal.

A reason why the first edge application server is not suitable for serving the first terminal may be that the first terminal is far away from the first edge application server. For example, the first terminal moves and then is far away from the first edge application server. In this case, a distance between the first terminal and the first edge application server is no longer optimal. This affects serving of the first edge application server for the first terminal. Alternatively, the first terminal may no longer need the first edge application server to provide a service. For example, in the room 1 of the game A, the user corresponding to the first terminal exits the game, and the first terminal exits the room 1, and no longer needs to access the first edge application server. The reason why the first edge application server is not suitable for serving the first terminal is not limited herein.

In an example, the first network element may determine, based on the second data network access identifier of the first terminal, whether the first edge application server is suitable for serving the first terminal. If the first edge application server is suitable for serving the first terminal, the first network element does not need to send the second data network access identifier to the second network element. If the first edge application server is not suitable for serving the first terminal, the first network element sends the second data network access identifier to the second network element.

For example, the first network element is the SMF network element. If the second data network access identifier is the same as the common DNAI accessed by the first terminal set, or the second data network access identifier is the same as the DNAI corresponding to the common EAS, the SMF network element determines that the common EAS or an EAS corresponding to the common DNAI is suitable for serving the first terminal. If the second data network access identifier is different from the common DNAI, or if the second data network access identifier is different from the DNAI corresponding to the common EAS, the SMF network element determines that the common EAS or an EAS corresponding to the common DNAI is not suitable for serving the first terminal.

In some embodiments of this application, before the first network element determines that the first terminal is disassociated from the first terminal set, the communication method further includes: The first network element receives second indication information, where the second indication information indicates that the first terminal is disassociated from the first terminal set.

For example, the first network element is the SMF network element. The second indication information may be sent to the SMF network element via a PCF network element, and the SMF network element determines, based on the second indication information, that the first terminal is disassociated from the first terminal set.

In some embodiments of this application, before the first network element determines that the first terminal is disassociated from the first terminal set, the communication method further includes the following steps:

Step a: The first network element receives a first message. The first message includes the identifier of the first terminal set and third indication information. The third indication information indicates that each terminal in the first terminal set needs to access the common EAS or the common DNAI. The first message may further include the first edge application server or the first data network access identifier.

In an example, the first message is the PCC rule, and the PCC rule includes the correlation identifier (an identifier of the first terminal set), and the indication information of the common EAS or the indication information of the common DNAI (the third indication information).

Step b: The first terminal accesses the first edge application server.

Specifically, a process that is described in the foregoing embodiment and in which the plurality of terminals in the first terminal set access the common EAS or the common DNAI is not described herein again.

It should be noted that the first terminal is not necessarily a terminal that first initiates a DNS query in the first terminal set. It may be understood as that the common EAS or the common DNAI corresponding to the first terminal set is not necessarily selected through a PDU session of the first terminal, and the common EAS or the common DNAI of the first terminal set is not necessarily determined based on or by considering the first terminal. Therefore, the common EAS or the EAS corresponding to the common DNAI is not necessarily an EAS most suitable for serving the first terminal.

Step c: The first network element receives a second message. The second message does not include the identifier of the first terminal set and/or the third indication information; or the second message includes the second indication information, and the second indication information indicates that the first terminal is disassociated from the first terminal set.

For example, the second message is an updated PCC rule, and does not include the correlation identifier and/or the indication information of the common EAS or the indication information of the common DNAI. When the updated PCC rule is compared with the PCC rule in step a, it may be determined that the first terminal no longer needs the common EAS or the EAS corresponding to the common DNAI to provide a service.

For example, the second message is the updated PCC rule. The updated PCC rule includes the correlation identifier and the second indication information.

In this way, the first network element can determine, based on the first message and the second message, that the first terminal is disassociated from the first terminal set.

A third identifier may be a service identifier, for example, a service data flow (service data flow, SDF), an application identifier (application identifier, App ID), or a full qualified domain name (full qualified domain name, FQDN).

It should be noted that, in some scenarios, the PCC rule or the updated PCC rule does not need to be limited by the service identifier. For example, regardless of any service that is accessed, the first terminal belongs to the first terminal set, or has a requirement of accessing the common EAS or the common DNAI. In this case, the PCC rule or the updated PCC rule does not need to be limited by the service identifier. In most scenarios except the foregoing scenarios, some services of the first terminal need a common EAS or a common DNAI, but some services do not need a common EAS or a common DNAI, and different services need different common EASs or common DNAIs. Therefore, a service identifier is needed to limit the PCC rule or the updated PCC rule.

In some embodiments of this application, before the first network element sends the second data network access identifier of the first terminal to the second network element, the method provided in this embodiment of this application further includes: The first network element determines to send the second data network access identifier of the first terminal to the second network element.

If the second network element determines that the common EAS or the EAS corresponding to the common DNAI is suitable for serving the first terminal, for example, the second edge application server selected based on the second data network access identifier is the same as an EAS corresponding to the first DNAI or the first EAS, the second network element no longer performs edge application server migration.

In some embodiments of this application, the first network element further sends fourth indication information to the second network element. The fourth indication information is used to request the second network element to select the second edge application server for the first terminal. Correspondingly, the second network element receives the fourth indication information from the first network element.

For example, the first network element is the SMF network element, and the second network element is an AF network element. The SMF network element sends, to the AF network element, information for requesting to select an EAS, and the AF network element selects, based on the second data network access identifier and the information for requesting to select the EAS, an EAS suitable for providing a service for the first terminal. The fourth indication information may alternatively be in another form used to request to select an EAS. This is not limited herein.

In some embodiments of this application, after the second network element selects the second edge application server based on the second data network access identifier or based on the second data network access identifier and the fourth indication information, the method provided in this embodiment of this application further includes: The second network element sends edge application server address replacement information to the first network element. The first network element receives the edge application server address replacement information. The edge application server address replacement information is used by the first terminal to connect to the second edge application server.

The edge application server address replacement information includes an IP address and a port number of the first edge application server, and an IP address and a port number of the second edge application server.

In the foregoing embodiment, the first network element is the session management network element, and the second network element is the application network element.

For example, another communication method provided in an embodiment of this application may be performed by a functional module that can invoke and perform a program and that is in a second network element, or a communication apparatus used in a second network element, for example, a chip, a chip system, or an integrated circuit. The chip, the chip system, or the integrated circuit may be disposed inside the second network element, or may be independent of the second network element. This is not limited in embodiments of this application.

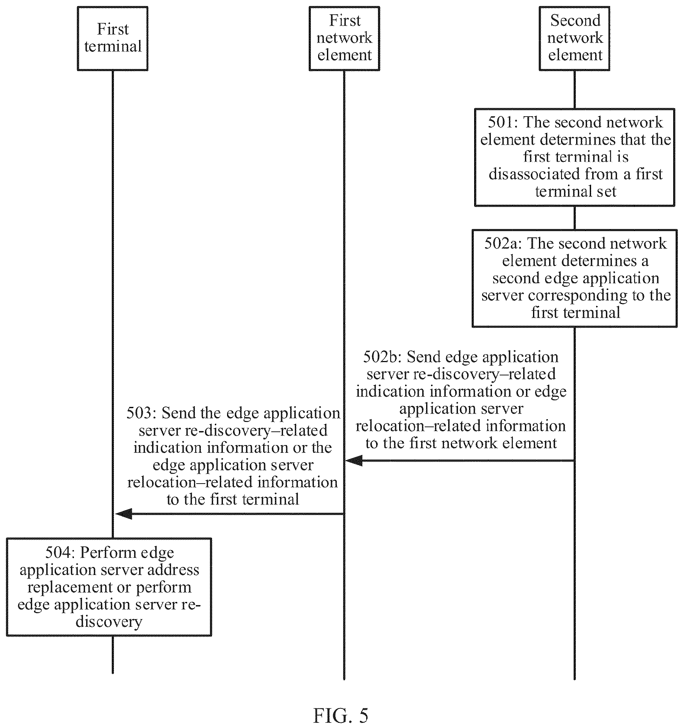

FIG. 5 shows another communication method according to an embodiment of this application. The method includes the following steps.

Step 501: A second network element determines that a first terminal is disassociated from a first terminal set. The first terminal set includes a plurality of terminals, and the plurality of terminals access a first edge application server or a first data network access identifier.

Optionally, after step 501, the second network element may perform either of the following step 502a and step 502b.

Step 502a: The second network element determines a second edge application server corresponding to the first terminal.

Step 502b: The second network element sends edge application server re-discovery-related indication information to a first network element, or sends edge application server relocation-related information to a first network element.

The edge application server relocation-related information is used by the first network element to determine to perform edge application server re-discovery or edge application server relocation, or indicate the first network element to trigger edge application server relocation.

Optionally, when the second network element performs step 502b, the method provided in this embodiment of this application may further include the following steps.

Step 503: The first network element sends the edge application server re-discovery-related indication information to the first terminal, or sends the edge application server relocation-related information to the first terminal. Correspondingly, the first terminal receives the edge application server re-discovery related indication information or the edge application server relocation-related information.

Step 504: The first terminal performs edge application server address replacement or perform edge application server re-discovery.

In the foregoing embodiment, after the second network element determines that the first terminal is disassociated from the first terminal set, the second network element may determine the second edge application server corresponding to the first terminal, or may send the edge application server re-discovery indication information or the edge application server relocation information to the first network element, and the first network element may trigger the first terminal to select a suitable edge application server, to select a better edge application server for the first terminal, so that a delay of the first terminal can be reduced and user experience can be improved.

In some embodiments of this application, before the second network element determines the second edge application server corresponding to the first terminal, or determines to send the edge application server relocation information to the first network element, the method provided in this embodiment of this application may further include: The second network element determines a second data network access identifier of the first terminal.

For example, the second network element may obtain the second data network access identifier of the first terminal by subscribing to a data network access identifier change event of the terminal.

In an example, the first network element is an SMF network element, and the second network element is an AF network element. The AF network element may send a subscription message to the SMF network element. The subscription message is used to subscribe to the second data network access identifier provided by the SMF network element for the AF network element when any terminal or a specified terminal (for example, the first terminal) in the terminal set exits the terminal set.

In some embodiments of this application, a method for the second network element to determine the second data network access identifier of the first terminal includes: The second network element requests the second data network access identifier of the first terminal from the first network element. The second network element receives the second data network access identifier from the first network element.

For example, the second network element sends fifth indication information to the first network element. The fifth indication information is used to request the second data network access identifier of the first terminal. The second network element may request the second data network access identifier of the first terminal in another form. This is not limited herein.

In some embodiments of this application, after the second network element determines the second edge application server corresponding to the first terminal, the method provided in this embodiment of this application further includes: The second network element sends edge application server address replacement information to the first network element. Correspondingly, the first network element receives the edge application server address replacement information from the second network element. For example, the edge application server address replacement information is used by the first terminal to connect to the second edge application server.

For the edge application server address replacement information, refer to the foregoing embodiment. Details are not described herein again.

Optionally, after the first network element receives the edge application server address replacement information from the second network element, the method provided in this embodiment of this application may further include: The first network element performs EAS address replacement. For a process of performing the EAS address replacement by the first network element, refer to the descriptions in the foregoing embodiment. Details are not described herein again.

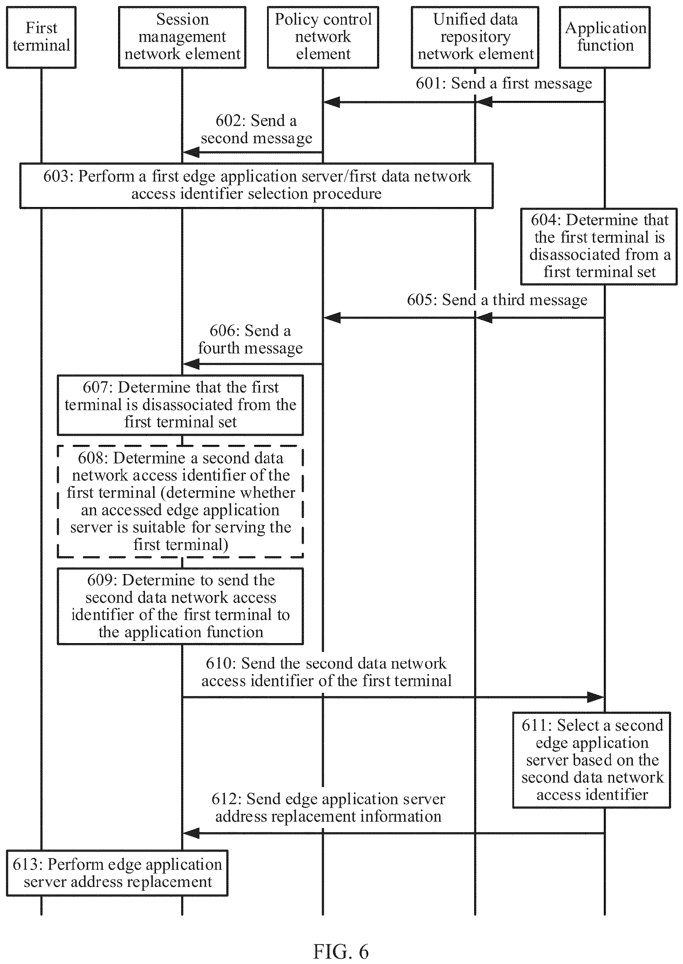

An example in which a first network element is an SMF network element and a second network element is an AF network element is used below to describe a process in which the SMF network element triggers, after the first terminal exits a first terminal set, the AF network element to reselect an EAS for a first terminal. A schematic flowchart of a communication method according to an embodiment of this application is described with reference to FIG. 6. The method includes the following steps.

Step 601: The AF network element sends a first message to a PCF network element. Correspondingly, the PCF network element receives the first message from the AF network element.

For example, the first message includes a member list of the first terminal set, a traffic correlation identifier, and indication information of a common EAS or indication information of a common DNAI.

For example, the traffic correlation identifier identifies the first terminal set.

Optionally, the first message may further include a service identifier. The service identifier indicates a service that is of the common EAS or the common DNAI and that needs to be accessed by each terminal in the first terminal set.

For example, the member list of the first terminal set includes identification information of the first terminal and identification information of one or more terminals other than the first terminal.

For example, the indication information of the common EAS is used to determine that each terminal in the first terminal set needs to access the common EAS. For example, the common EAS is the foregoing first edge application server.

For example, the indication information of the common DNAI indicates that each terminal in the first terminal set needs to access the common DNAI. For example, the common EAS is a first data network access identifier.

Specifically, the AF network element sends the member list of the first terminal set, the traffic correlation identifier, and the indication information of the common EAS or the indication information of the common DNAI to a UDR network element. The UDR network element sends the member list of the first terminal set, the traffic correlation identifier, and the indication information of the common EAS or the indication information of the common DNAI to the PCF network element. The PCF network element generates a PCC rule based on the member list of the first terminal set, the traffic correlation identifier, and the indication information of the common EAS or the indication information of the common DNAI. For example, the PCC rule includes the member list of the first terminal set, the traffic correlation identifier, and the indication information of the common EAS or the indication information of the common DNAI. Optionally, the PCC rule may further include the service identifier.

Step 602: The PCF network element sends a second message to the SMF network element. Correspondingly, the SMF network element receives the second message from the PCF network element.

For example, the second message includes the traffic correlation identifier and the indication information of the common EAS or the indication information of the common DNAI.

Optionally, the PCF network element may further send the service identifier to the SMF network element, to determine a specific service accessed by each terminal in the first terminal set.

In an example, the third message sent by the PCF network element to the SMF network element includes the PCC rule. Alternatively, the third message is the PCC rule.

In an example, the information may be sent through an AF traffic influence (AF traffic influence) procedure. However, provided that the SMF network element obtains the information, a process and a manner in which the SMF network element obtains the information are not limited in this embodiment of this application, and the SMF network element does not necessarily need to obtain the information by using the PCC rule.

Step 603: The SMF network element performs a common EAS selection procedure, or performs a common DNAI selection procedure.

It should be noted that in a process in which the SMF network element selects the common EAS or the common DNAI, the first terminal is not necessarily a terminal that first initiates a DNS query in the first terminal set. It may be understood as that the common EAS or the common DNAI corresponding to the first terminal set is not necessarily selected through a PDU session of the first terminal, and the common EAS or the common DNAI of the first terminal set is not necessarily determined based on or considering the first terminal. Therefore, the common EAS or an EAS corresponding to the common DNAI is not necessarily an EAS most suitable for serving the first terminal.

Step 604: The AF network element determines that the first terminal is disassociated from the first terminal set.

For example, when the first terminal moves, a distance between the first terminal and the common EAS becomes longer, or the common EAS currently accessed by the first terminal is overloaded. Consequently, the common EAS is not suitable for providing a service for the first terminal. The first terminal no longer needs to access the common EAS or the common DNAI with another terminal in the first terminal set.

The first terminal may be any terminal in the first terminal set, and the first terminal may actively exit the first terminal set, for example, the distance between the first terminal and the common EAS becomes longer. Alternatively, the first terminal does not need to continue to access a service on the common EAS, or the first terminal is a terminal selected by the AF network element from the first terminal set.

Step 605: The AF network element sends a third message to the PCF network element. Correspondingly, the PCF network element receives the third message from the AF network element.

For example, the third message includes a member list of an updated first terminal set, the traffic correlation identifier, and the indication information of the common EAS or the indication information of the common DNAI.

The member list of the updated first terminal set does not include the identification information of the first terminal.

In an example, the AF network element first sends the third message to the UDR network element, where the third message includes the member list of the updated first terminal set, the traffic correlation identifier, and the indication information of the common EAS or the indication information of the common DNAI. Then, the UDR network element sends the member list of the updated first terminal set, the traffic correlation identifier, and the indication information of the common EAS or the indication information of the common DNAI to the PCF network element.

Alternatively, step 605 may be replaced with the following: The AF network element sends the third message to the UDR network element, and the UDR network element sends the third message to the PCF network element.

Optionally, that the AF network element sends the third message to the UDR network element may further include sending the traffic correlation identifier. The UDR network element sends the traffic correlation identifier to the PCF network element.

Step 606: The PCF network element sends a fourth message to the SMF network element. Correspondingly, the SMF network element receives the fourth message from the PCF network element.

For example, the fourth message does not include the traffic correlation identifier and/or the indication information of the common EAS or the indication information of the common DNAI.

For example, the fourth message does not include the traffic correlation identifier and/or the indication information of the common EAS or the indication information of the common DNAI.

For example, the fourth message includes the traffic correlation identifier and second indication information.

In an example, the fourth message includes an updated PCC rule, and the updated PCC rule does not include the traffic correlation identifier and/or the indication information of the common EAS or the indication information of the common DNAI.

In another example, the PCF network element sends an updated PCC rule to the SMF network element, where the updated PCC rule includes the traffic correlation identifier and the second indication information.

It should be noted that sending of the updated PCC rule by the PCF network element to the SMF network element is performed at a PDU session granularity, and the updated PCC rule may not include the identification information of the first terminal.

It may be understood that step 601 to step 606 only indicate that the information may be sent to the SMF network element as the updated PCC rule, or may be sent to the SMF network element in another manner or carrier. This is not limited in this application.

Step 607: The SMF network element determines that the first terminal is disassociated from the first terminal set.

For example, because the fourth message sent by the PCF network element to the SMF network element in step 602 and step 606 is at a PDU session granularity, and one PDU session can serve only one terminal, a scope of the PCC rule is naturally the current PDU session, and it may be determined that the terminal is the first terminal. Therefore, the SMF network element receives the updated PCC rule. Because the updated PCC rule does not include the traffic correlation identifier and/or the indication information of the common EAS or the indication information of the common DNAI. The SMF network element may determine, by comparing the updated PCC rule with the received PCC rule that includes the traffic correlation identifier and the indication information of the common EAS or the indication information of the common DNAI, that the first terminal is disassociated from the first terminal set.

For example, the SMF network element receives the fourth message, where the fourth message includes the second indication information, and the second indication information indicates that the first terminal is disassociated from the first terminal set. Therefore, the SMF network element determines that the first terminal is disassociated from the first terminal set.

For example, the SMF network element compares the member list of the updated first terminal set with the previously obtained member list of the first terminal set. If the member list of the updated first terminal set lacks the identification information of the first terminal compared with the member list of the first terminal set, the SMF network element determines that the first terminal is disassociated from the first terminal set.

Step 608: The SMF network element determines a second data network access identifier of the first terminal based on the first terminal being disassociated from the first terminal set.

For example, the SMF network element may obtain the second data network access identifier from network elements such as an AMF network element and an LMF network element, or the SMF network element autonomously determines the second data network access identifier.

Optionally, when the first terminal is disassociated from the first terminal set, the SMF network element determines whether the common EAS accessed by the first terminal or the EAS that corresponds to the common DNAI and that is accessed by the first terminal is suitable for serving the first terminal.

For example, if the second data network access identifier is the same as the common DNAI accessed by the first terminal set, or the second data network access identifier is the same as a DNAI corresponding to the common EAS, the SMF network element determines that the common EAS or the EAS corresponding to the common DNAI is suitable for serving the first terminal. If the second data network access identifier is different from the common DNAI, or if the second data network access identifier is different from the DNAI corresponding to the common EAS, the SMF network element determines that the common EAS or the EAS corresponding to the common DNAI is not suitable for serving the first terminal.

Step 609: The SMF network element determines to send the second data network access identifier of the first terminal to the AF network element.

For example, the SMF network element determines, based on the first terminal exiting the first terminal set, to send the second data network access identifier to the AF network element.

For example, in step 608, if it is determined that the common EAS is not suitable for serving the first terminal, the SMF network element determines, based on the first terminal exiting the first terminal set and the common EAS being not suitable for serving the first terminal, to send the second data network access identifier to the AF network element.

Step 610: The SMF network element sends the second data network access identifier of the first terminal to the AF network element. Correspondingly, the AF network element receives the second data network access identifier from the SMF network element.

Optionally, the SMF network element sends third indication information to the AF network element, to request the AF network element to select a second edge application server for the first terminal.

It may be understood that the AF network element may send a subscription message to the SMF network element. The subscription message is used to subscribe to the second data network access identifier provided by the SMF network element for the AF network element when any terminal or a specified terminal (for example, the first terminal) in the terminal set exits the terminal set. In this way, when determining that any terminal or the specified terminal (for example, the first terminal) exits the terminal set, the SMF network element performs step 610.

Step 611: The AF network element selects the second edge application server based on the second data network access identifier of the first terminal.

When the AF network element further receives the third indication information from the SMF network element, if the AF network element determines that the common EAS is not suitable for serving the first terminal, the AF network element selects the second edge application server for the first terminal based on the second data network access identifier.

Optionally, when the second edge application server selected by the AF network element for the terminal based on the second data network access identifier of the first terminal is different from the first edge application server, the method provided in this embodiment of this application may further include step 612 and step 613.

When the second edge application server selected by the AF network element for the terminal based on the second data network access identifier of the first terminal is the same as the first edge application server, step 612 and step 613 may be omitted.

Step 612: The AF network element sends edge application server address replacement information to the SMF network element. Correspondingly, the SMF network element receives the edge application server address replacement information from the AF network element.

The edge application server address replacement information includes an IP address and a port number of the common EAS or the EAS corresponding to the common DNAI, and an IP address and a port number of the second edge application server. After receiving the edge application server address replacement information, the SMF network element configures an L-PSA. In an example, the SMF configures content of the L-PSA. Specifically, the SMF may indicate the L-PSA to modify a destination address of an uplink packet whose destination address is an address of the first EAS to an address of the second EAS, and modify a source address of a downlink packet whose source address is the address of the second EAS to the address of the first EAS.

Specifically, after selecting the second edge application server based on the second data network access identifier, the AF network element copies, to the second edge application server, a context that includes application information (for example, a role status in an ongoing game and progress of a video that is being watched) of a user and that is of the first terminal running on the common EAS or the EAS corresponding to the common DNAI.

Step 613: The SMF network element performs edge application server address replacement.

For example, the edge application server address replacement information includes the IP address and the port number of the first edge application server and the IP address and the port number of the second edge application server.

In some embodiments of this application, if the first terminal needs to change the terminal set, for example, the first terminal needs to be transferred from the first terminal set to a second terminal set, the first network element receives information about the second terminal set. Before the first network element determines that the first terminal is disassociated from the first terminal set, the second message received by the first network element further includes an identifier of the second terminal set, and a plurality of terminals in the second terminal set need to access a third edge application server or a third data network access identifier.

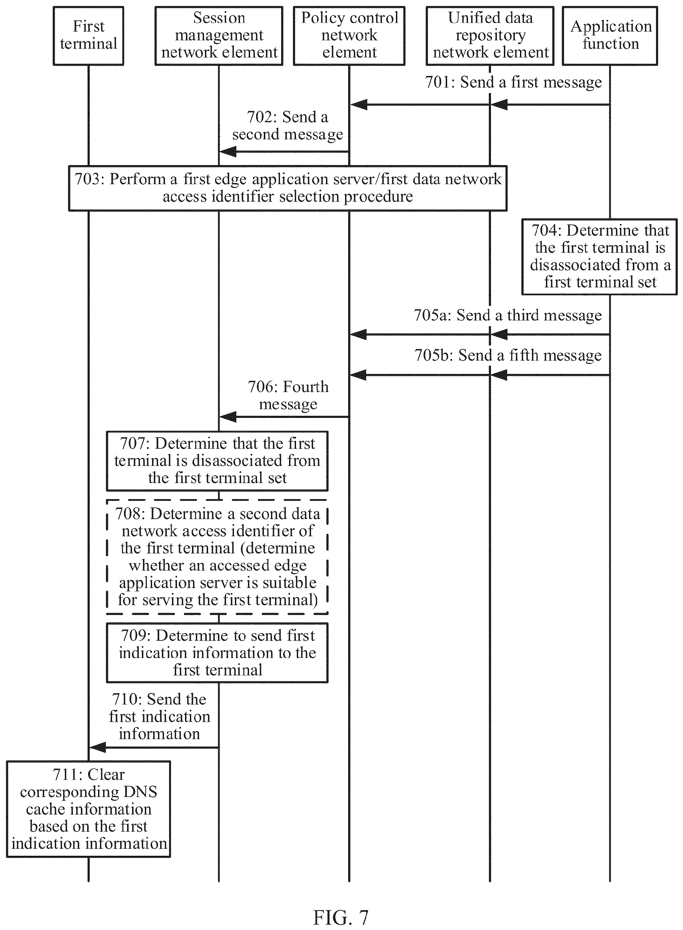

An example in which a first network element is an SMF network element and a second network element is an AF network element is used below to describe a schematic flowchart of another communication method according to an embodiment of this application with reference to FIG. 7. A difference between the method and that in the embodiment shown in FIG. 6 lies in that: In the embodiment shown in FIG. 7, when the first terminal exits the terminal set, the SMF network element sends the DNAI of the first terminal to the AF. In the embodiment shown in FIG. 7, when a first terminal exits a terminal set, the SMF network element triggers EAS re-discovery for the first terminal. The method includes the following steps.

Step 701 to step 705a are the same as step 601 to step 605 described in the foregoing embodiment. Details are not described herein again.

If the first terminal needs to change the terminal set, for example, the first terminal needs to be transferred from a first terminal set to a second terminal set, step 705b is performed.

Step 705b: The AF network element sends a fifth message to a PCF network element. Correspondingly, the PCF network element receives the fifth message from the AF network element.

For example, the fifth message includes a member list (including identification information of one or more terminals and identification information of the first terminal) of the first terminal set, a second traffic correlation identifier (identification information of the second terminal set), and indication information of a common EAS or indication information of a common DNAI.

Step 706 is the same as step 606. Details are not described herein again.

In an example, the PCF network element sends an updated PCC rule to the SMF network element, where the updated PCC rule includes the second traffic correlation identifier.

Step 707: The SMF determines that the first terminal is disassociated from the first terminal set, or the first terminal joins the second terminal set.

For an implementation of step 707, refer to the descriptions in the foregoing embodiment. Details are not described herein again.

In an example, the SMF network element determines, based on the second correlation identifier, that the first terminal joins the second terminal set.

Step 708: The SMF network element determines a second data network access identifier of the first terminal based on the first terminal being disassociated from the first terminal set or the first terminal joining the second terminal set.

Optionally, the SMF network element determines whether the common EAS accessed by the first terminal or an EAS that corresponds to the common DNAI and that is accessed by the first terminal is suitable for serving the first terminal.

For example, in an implementation, when determining the second data network access identifier for the first terminal, the SMF network element may not perform an action of determining whether the common EAS accessed by the first terminal or the EAS that corresponds to the common DNAI and that is accessed by the first terminal is suitable for serving the first terminal. This is because, regardless of whether the common EAS or the EAS corresponding to the common DNAI is suitable for serving the first terminal, the SMF network element may need to send the second data network access identifier of the first terminal to the AF network element.

For example, in another implementation, when determining the second data network access identifier for the first terminal, if the SMF network element does not perform an action of determining whether the common EAS accessed by the first terminal or the EAS that corresponds to the common DNAI and that is accessed by the first terminal is suitable for serving the first terminal, the SMF network element does not need to obtain the second data network access identifier of the first terminal. Therefore, step 708 may be omitted.

Step 709: The SMF network element determines to send first indication information to the first terminal.

In an example, the SMF network element determines to send the first indication information to the first terminal only based on the first terminal being disassociated from the first terminal set or the first terminal joining the second terminal set.

In another example, if determining whether the common EAS accessed by the first terminal or the EAS that corresponds to the common DNAI and that is accessed by the first terminal is suitable for serving the first terminal is performed in step 708, when the first terminal is disassociated from the first terminal set, or the first terminal joins the second terminal set, and the common EAS or the EAS corresponding to the common DNAI is not suitable for serving the first terminal, the SMF may determine to send the first indication information to the first terminal.

Step 710: The SMF network element sends the first indication information to the first terminal. Correspondingly, the first terminal receives the first indication information from the SMF network element.

For example, the SMF network element may send a PDU session update message to the first terminal. Correspondingly, the first terminal receives the PDU session update message from the SMF network element. The PDU session update message includes the first indication information. For example, the first indication information is EAS re-discovery indication information.

The PDU session update message is a PDU session modification instruction.

Optionally, the PDU session update message further includes a service identifier.

Step 711: The first terminal clears corresponding DNS cache information.

For example, when the first indication information further indicates the first terminal to clear the DNS cache information, the first terminal clears the corresponding DNS cache information based on the first indication information.

For example, in addition to sending the first indication information to the first terminal, when the SMF network element may further send, to the first terminal, indication information for indicating to clear a DNS cache, the first terminal may clear the corresponding DNS cache information based on the indication information for indicating to clear the DNS cache.

For example, after receiving the first indication information, when the SMF network element determines that an EAS needs to be reselected, the first terminal deletes the DNS cache information.

Optionally, the first indication information includes the service identifier, and the first terminal clears a DNS cache related to the service identifier.

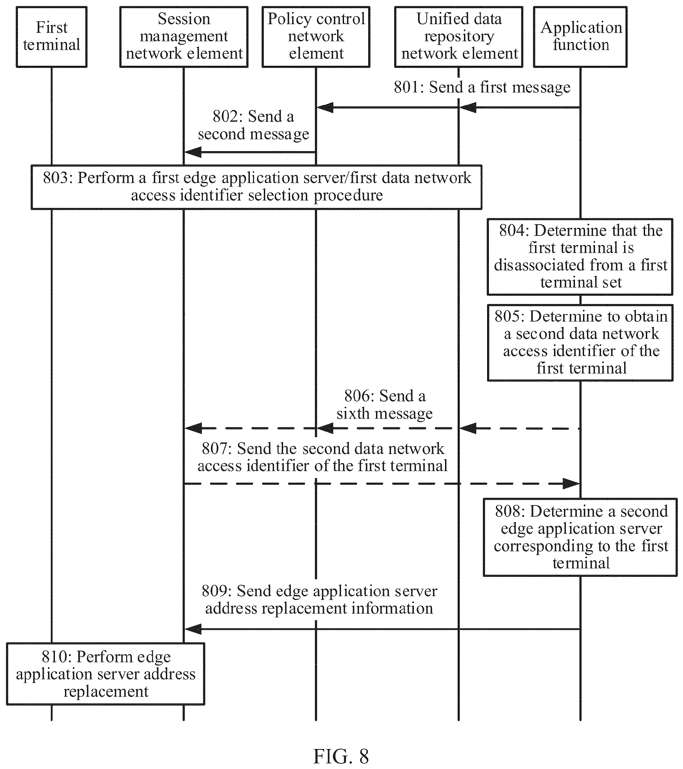

An example in which a first network element is an SMF network element and a second network element is an AF network element is used below to describe a process in which the AF network element reselects an EAS for a first terminal after the first terminal exits a first terminal set. A schematic flowchart of still another communication method according to an embodiment of this application is described with reference to FIG. 8. A difference between the method and those in the embodiments shown in FIG. 6 and FIG. 7 lies in that: In the embodiments shown in FIG. 6 and FIG. 7, the SMF network element triggers the AF network element to reselect the EAS for the first terminal, or the SMF network element triggers the edge application server re-discovery for the first terminal. In the embodiment shown in FIG. 8, the AF network element directly selects a second edge application server for the first terminal. The method includes the following steps.

Step 801 to step 804 are the same as step 601 to step 604 or step 701 to step 704 described in the foregoing embodiments. Details are not described herein again.

Step 805: When determining that the first terminal is disassociated from the first terminal set, the AF network element determines a second data network access identifier of the first terminal.

For example, the AF network element subscribes to a data network access identifier change event of a terminal. When any terminal in the first terminal set exits the first terminal set, the SMF network element autonomously provides the second data network access identifier for the AF network element.

It should be noted that if the AF network element subscribes to the data network access identifier change event of the terminal in advance, and has already received the data network access identifier sent by the SMF network element, the AF network element has already obtained and determined the second data network access identifier of the first terminal, or the SMF network element has already obtained the second data network access identifier of the first terminal in another manner. In this case, step 806 may not be performed. Alternatively, if the AF network element does not obtain and determine the second data network access identifier of the first terminal, step 806 needs to be performed.

Step 806: The AF network element sends a sixth message to the SMF network element. Correspondingly, the SMF network element receives the sixth message from the AF network element.

For example, the sixth message is used by the SMF network element to determine to provide the second data network access identifier of the first terminal for the AF network element. For example, the sixth message may include fifth indication information. The sixth indication information is used to request the second data network access identifier of the first terminal. Alternatively, indication information included in the sixth message indicates that the first terminal is disassociated from the first terminal set.

Optionally, the AF network element further sends a service identifier to the SMF network element. For example, the sixth message may include the service identifier.

Specifically, the AF network element sends the sixth message (optionally, the service identifier) to a UDR network element. The UDR network element sends the sixth message (optionally, the service identifier) to a PCF network element. The PCF network element sends the sixth message (optionally, the service identifier) to the SMF network element.

The AF network element may send the sixth message to the SMF network element in a plurality of manners. For example, the AF network element performs sending through an AF traffic influence procedure. In this manner, because an updated PCC rule between the PCF network element and the SMF network element is at a PDU session granularity, only a part sent by the AF network element to the UDR network element or the PCF network element needs to include identification information of the first terminal, and the identification information of the first terminal does not need to be sent to the SMF network element. The AF network element may alternatively perform sending to the SMF network element through a non-PDU session (for example, at a terminal granularity). In this manner, the sending granularity may include a plurality of terminals. In this case, identification information of the first terminal needs to be sent. A manner in which the AF network element sends the fifth message to the SMF network element is not limited in this application.

Step 807: The SMF network element sends the second data network access identifier of the first terminal to the AF network element. Correspondingly, the AF network element receives the second data network access identifier from the SMF network element.

For example, the AF network element subscribes to the data network access identifier change event of the terminal. When any terminal in the first terminal set exits the first terminal set, the SMF network element sends the second data network access identifier to the AF network element.

For example, the SMF network element sends the second data network access identifier of the first terminal to the AF network element based on the fifth indication information sent by the AF network element.

Step 808: The AF network element determines the second edge application server for the first terminal based on the second data network access identifier.

For example, in a possible implementation, the AF network element determines that the first terminal exits the first terminal set, and determines to select the second edge application server for the first terminal. In other words, the AF network element triggers EAS reselection provided that the AF network element determines that the first terminal exits the first terminal set.

In another possible implementation, when the first terminal exits the first terminal set and a common EAS is not suitable for serving the first terminal, the AF network element may determine to select the second edge application server for the first terminal.

In another example, the AF network element may determine, based on the first terminal being disassociated from the first terminal set and a common EAS being not suitable for serving the first terminal, to select the second edge application server corresponding to the first terminal. It may be understood as that selection of the second edge application server is triggered only when both conditions are met.

In the foregoing examples, the AF network element may alternatively determine the second edge application server based on the second data network access identifier.

Step 809 and step 810 are the same as step 612 and step 613 in the foregoing embodiment. Details are not described herein again.

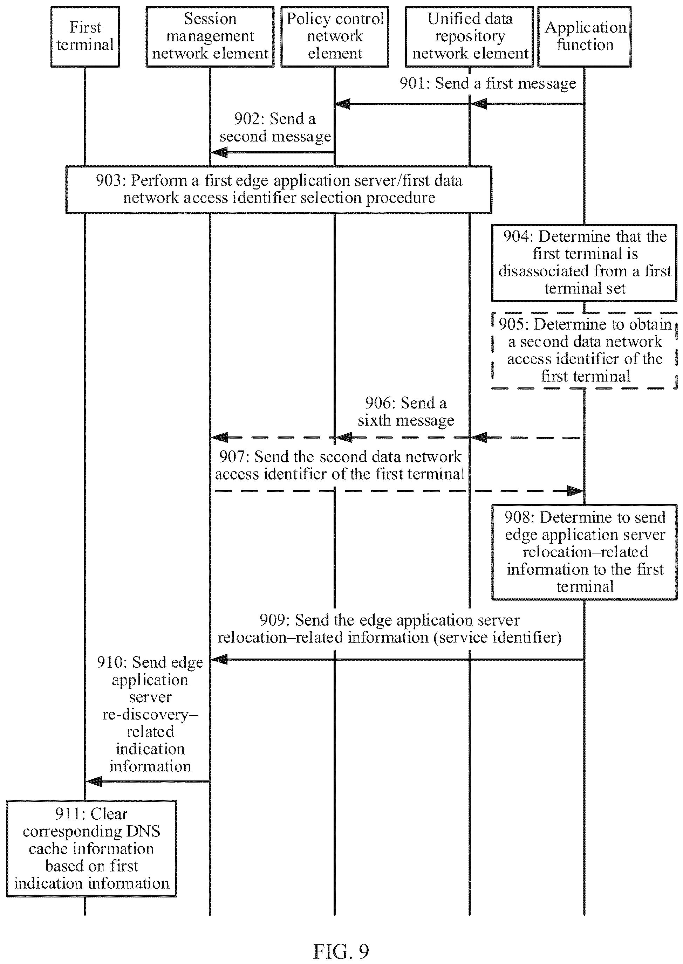

An example in which a first network element is an SMF network element and a second network element is an AF network element is used below to describe a process in which the AF network element reselects an EAS for a first terminal after the first terminal exits a first terminal set. A schematic flowchart of another communication method according to an embodiment of this application is described with reference to FIG. 9. A difference between the method and that in the embodiment shown in FIG. 8 lies in that: In the embodiment shown in FIG. 8, when the first terminal exits the terminal set, the AF network element determines the second edge application server of the first terminal. In the embodiment shown in FIG. 9, when the first terminal exits the terminal set, the SMF network element sends edge application server re-discovery indication information or edge application server relocation-related information to the SMF network element. The method includes the following steps.

Step 901 to step 907 are the same as step 801 to step 807 described in the foregoing embodiment. Details are not described herein again.

Step 908: The AF network element determines, based on the first terminal being disassociated from the first terminal set, to send the edge application server relocation-related information to the first terminal.

Optionally, the AF network element further determines, based on a second data network access identifier of the first terminal, whether a common EAS or an EAS corresponding to a common DNAI is suitable for serving the first terminal.

For example, the second data network access identifier is compared with the common DNAI accessed by the first terminal set. A specific implementation is shown in step 608. Details are not described herein again.

Step 909: The AF network element sends the edge application server relocation-related information to the SMF network element. Correspondingly, the SMF network element receives the edge application server relocation-related information from the AF network element.

For example, the edge application server relocation-related information includes EAS relocation indication information.

Optionally, the edge application server relocation-related information may further include a service identifier.

Specifically, the AF network element first sends the edge application server relocation-related information to a UDR network element, the UDR network element then sends the edge application server relocation-related information to a PCF network element, and finally, the PCF network element sends the edge application server relocation-related information to the SMF network element.

Step 910 and step 911 are the same as step 710 and step 711 in the foregoing embodiment. Details are not described herein again.

The foregoing mainly describes the solutions in embodiments of this application from a perspective of interaction between network elements. It may be understood that, to implement the foregoing functions, the network elements such as the first network element and the second network element include corresponding structures and/or software modules for implementing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

In embodiments of this application, the first network element and the second network element each may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division. During actual implementation, another division manner may be used.

The foregoing describes the methods in embodiments of this application with reference to FIG. 4 and FIG. 5. The following describes a communication apparatus that is provided in embodiments of this application and that performs the foregoing methods. A person skilled in the art may understand that the methods and the apparatus may be mutually combined and referenced. The communication apparatus provided in this embodiment of this application may perform the steps performed by the first network element and the second network element in the communication methods shown in FIG. 4 and FIG. 5.

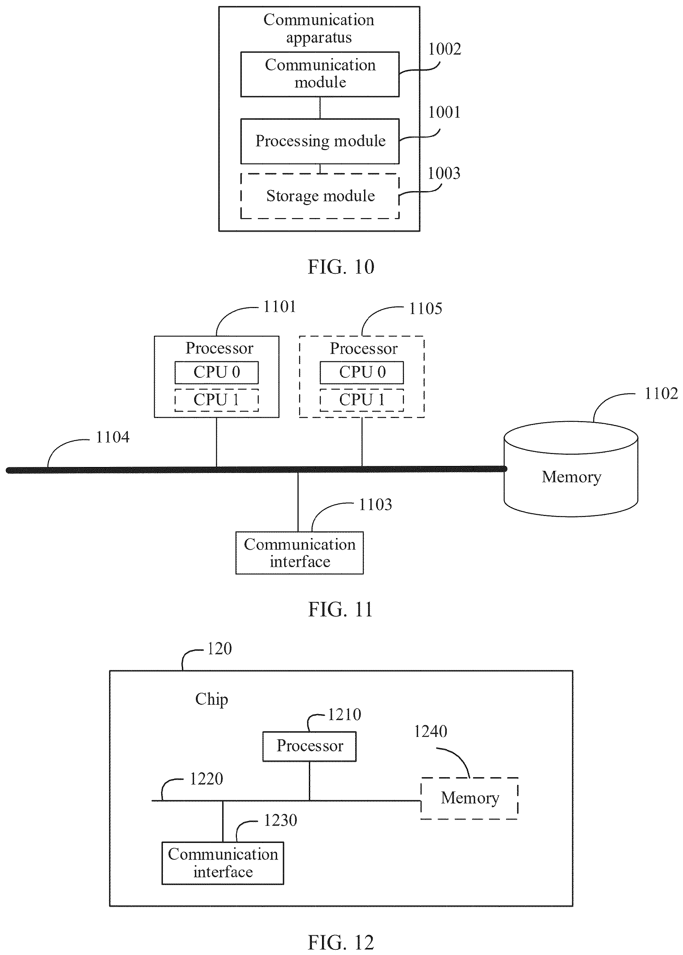

When an integrated unit is used, FIG. 10 shows a communication apparatus in the foregoing embodiment. The communication apparatus may include a communication module 1002 and a processing module 1001.

In an optional implementation, the communication apparatus may further include a storage module 1003, configured to store program code and data of the communication apparatus.

In an example, the communication apparatus is a first network element 201, or is a chip used in a first network element 201. In this case, the processing module 1001 is configured to support the communication apparatus in performing step 401 in the foregoing embodiment. The communication module 1002 is configured to support the communication apparatus in performing a sending action performed by the first network element 201 in step 402 in the foregoing embodiment.

In another example, the communication apparatus is a second network element 202, or is a chip used in a second network element 202. In this case, the processing module 1001 is configured to support the communication apparatus in performing step 501, step 502a, and step 502b in the foregoing embodiment. The communication module 1002 is configured to support the communication apparatus in performing a sending action performed by the second network element in step 502a or step 502b in the foregoing embodiment.

The processing module 1001 may be a processor or controller, for example, the processing module may be a central processing unit, a general-purpose processor, a digital signal processor, an application-specific integrated circuit, a field-programmable gate array or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The communication module may be a transceiver, a transceiver circuit, a communication interface, or the like. The storage module may be a memory.

When the processing module 1001 is a processor 1101 or a processor 1105, the communication module 1002 is a communication interface 1103, and the storage module 1003 is a memory 1102, the communication apparatus in this application may be a communication device shown in FIG. 11.

FIG. 11 is a diagram of a hardware structure of a communication device according to an embodiment of this application. A processor 1101, a communication line 1104, and at least one communication interface (a communication interface 1103 is used as an example for description in FIG. 11) are included.

The processor 1101 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 1104 may include a path for information transmission between the foregoing components.

The communication interface 1103 is configured to exchange information with another apparatus via, for example, any type of apparatus like a transceiver, and is configured to communicate with another device or a communication network, for example, an Ethernet, a radio access network (radio access network, RAN), or a wireless local area network (wireless local area network, WLAN).

Optionally, the communication device may further include a memory 1102.

The memory 1102 may be a read-only memory (read-only memory, ROM) or another type of static storage device that can store static information and instructions, or a random access memory (random access memory, RAM) or another type of dynamic storage device that can store information and instructions. Alternatively, the memory 1102 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory 1102 is not limited thereto. The memory may exist independently, and is connected to the processor through the communication line 1104. The memory may alternatively be integrated with the processor.

The memory 1102 is configured to store computer-executable instructions used to implement the solutions in this application, and execution is controlled by the processor 1101. The processor 1101 is configured to execute the computer-executable instructions stored in the memory 1102, to implement the communication method provided in the foregoing embodiments of this application.

Optionally, the computer-executable instructions in this embodiment of this application may also be referred to as application code. This is not specifically limited in this embodiment of this application.

In specific implementation, in an embodiment, the processor 1101 may include one or more CPUs, for example, a CPU 0 and a CPU 1 in FIG. 11.

In specific implementation, in an embodiment, the communication device may include a plurality of processors, for example, the processor 1101 and a processor 1105 in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

For steps performed by the processor 1101 and the processor 1105, refer to the steps performed by the processing module 1001. For steps performed by the communication interface 1103, refer to the steps performed by the communication module 1002.

FIG. 12 is a diagram of a structure of a chip 120 according to an embodiment of this application. The chip 120 includes one or more than two (including two) processors 1210 and a communication interface 1230.

Optionally, the chip 120 further includes a memory 1240, and the memory 1240 may include a read-only memory and a random access memory and provide operation instructions and data for the processor 1210. A part of the memory 1240 may further include a non-volatile random access memory (non-volatile random access memory, NVRAM).

In some implementations, the memory 1240 stores the following elements, an execution module or a data structure, a subset thereof, or an extended set thereof.

In this embodiment of this application, a corresponding operation is performed by invoking the operation instructions stored in the memory 1240 (the operation instructions may be stored in an operating system).

The processor 1210 controls a processing operation of any one of a first network element, a second network element, and a first terminal. The processor 1210 may also be referred to as a central processing unit (central processing unit, CPU).

The memory 1240 may include a read-only memory and a random access memory, and provide instructions and data for the processor 1210. A part of the memory 1240 may further include an NVRAM. For example, during application, the memory 1240, the communication interface 1230, and the memory 1240 are coupled together through a bus system 1220. In addition to a data bus, the bus system 1220 may further include a power bus, a control bus, a status signal bus, and the like. However, for clarity of description, various buses are marked as the bus system 1220 in FIG. 12.

The methods disclosed in the foregoing embodiments of this application may be applied to the processor 1210, or implemented by the processor 1210. The processor 1210 may be an integrated circuit chip and has a signal processing capability. In an implementation process, steps of the foregoing methods may be implemented through an integrated logic circuit of hardware in the processor 1210 or instructions in a form of software. The processor 1210 may be a general-purpose processor, a digital signal processor (digital signal processor, DSP), an ASIC, a field-programmable gate array (field-programmable gate array, FPGA) or another programmable logic device, a discrete gate, a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1240. The processor 1210 reads information in the memory 1240 and implements the steps of the foregoing method in combination with hardware of the processor 1210.

In a possible implementation, the communication interface 1230 is configured to perform the receiving and sending steps of the first network element in the embodiments shown in FIG. 4 and FIG. 5. The processor 1210 is configured to perform the processing steps of the first network element in the embodiments shown in FIG. 4 and FIG. 5.

In another possible implementation, the communication interface 1230 is configured to perform the receiving and sending steps of the second network element in the embodiments shown in FIG. 4 and FIG. 5. The processor 1210 is configured to perform the processing steps of the second network element in the embodiments shown in FIG. 4 and FIG. 5.

According to an aspect, a computer-readable storage medium is provided. The computer-readable storage medium stores instructions. When the instructions are run, the functions performed by the second network element in FIG. 4 and FIG. 5 are implemented.

According to an aspect, a computer-readable storage medium is provided. The computer-readable storage medium stores instructions. When the instructions are run, the functions performed by the first network element in FIG. 4 and FIG. 5 are implemented.

According to an aspect, a computer program product including instructions is provided. The computer program product includes the instructions. When the instructions are run, the functions performed by the second network element in FIG. 4 and FIG. 5 are implemented.

According to an aspect, a computer program product including instructions is provided. The computer program product includes the instructions. When the instructions are run, the functions performed by the first network element in FIG. 4 and FIG. 5 are implemented.

According to an aspect, a chip is provided. The chip is used in a first network element. The chip includes at least one processor and a communication interface. The communication interface is coupled to the at least one processor. The processor is configured to run instructions, to implement the functions performed by the first network element in FIG. 4 and FIG. 5.

According to an aspect, a chip is provided. The chip is used in a data analytics network element. The chip includes at least one processor and a communication interface. The communication interface is coupled to the at least one processor. The processor is configured to run instructions, to implement the functions performed by the second network element in FIG. 4 and FIG. 5.

This application provides a communication system. The communication system includes a first network element and a target device, and the target device is a first terminal or a second network element. The first network element is configured to perform the functions performed by the first network element in FIG. 4 and FIG. 5, and the second network element is configured to perform the functions performed by the data analytics network element in FIG. 4 and FIG. 5.

All or some of the foregoing embodiments may be implemented by software, hardware, firmware, or any combination thereof. When the software is used for the implementation, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that the person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
determining, by a first network element, that a first terminal is disassociated from a first terminal set, wherein the first terminal set comprises one or more terminals, and the one or more terminals access a first edge application server or a first data network access identifier; and
when the first network element determines that the first terminal is disassociated from the first terminal set, sending, by the first network element to the first terminal, a protocol data unit PDU session modification instruction that carries first indication information, wherein the first indication information is edge application server re-discovery indication information.

2. The method according to claim 1, wherein the first indication information indicates the first terminal to clear cached edge application server information.

3. The method according to claim 1, wherein the first indication information further indicates the first terminal to clear a domain name system cache, or the first network element sends, to the first terminal, indication information that indicates to clear a domain name system cache.

4. A communication method, wherein the method comprises:
determining, by a first network element, that a first terminal is disassociated from a first terminal set, wherein the first terminal set comprises one or more terminals, and the one or more terminals access a first edge application server or a first data network access identifier; and
when the first network element determines that the first terminal is disassociated from the first terminal set, sending, by the first network element, a second data network access identifier of the first terminal to a second network element.

5. The method according to claim 4, wherein the method further comprises:
when the first terminal is disassociated from the first terminal set, determining, by the first network element, the second data network access identifier.

6. The method according to claim 5, wherein the first terminal is disassociated from the first terminal set, the first edge application server or an edge application server corresponding to the first data network access identifier is not suitable for serving the first terminal, and the first network element determines the second data network access identifier.

7. The method according to any one of claims 1 to 6, wherein determining, by the first network element, that the first terminal is disassociated from the first terminal set comprises:
receiving, by the first network element, second indication information; and
determining, by the first network element based on the second indication information, that the first terminal is disassociated from the first terminal set.

8. The method according to any one of claims 1 to 6, wherein before determining, by the first network element, that the first terminal is disassociated from the first terminal set, the method further comprises:
receiving, by the first network element, a first message, wherein the first message comprises an identifier of the first terminal set and third indication information, and the third indication information indicates that each terminal in the first terminal set needs to access the first edge application server or the first data network access identifier; and
receiving, by the first network element, a second message, wherein the second message does not comprise the identifier of the first terminal set and/or the third indication information; or the second message comprises second indication information, and the second indication information indicates that the first terminal is disassociated from the first terminal set; and
determining, by the first network element, that the first terminal is disassociated from the first terminal set comprises:
determining, by the first network element based on the first message and the second message, that the first terminal is disassociated from the first terminal set.

9. The method according to claim 8, wherein the first message further comprises a third identifier, and the third identifier is used to determine a service associated with the first terminal set.

10. The method according to any one of claims 1 to 9, wherein the method further comprises:
sending, by the first network element, fourth indication information to the second network element, wherein the fourth indication information is used to request the second network element to select a second edge application server for the first terminal.

11. The method according to any one of claims 1 to 10, wherein the method further comprises:
receiving, by the first network element, edge application server address replacement information, wherein the edge application server address replacement information is used by the first terminal to access the second edge application server.

12. The method according to claim 8, wherein the second message received by the first network element comprises an identifier of a second terminal set, and a plurality of terminals in the second terminal set need to access a third edge application server or a third data network access identifier.

13. A communication method, wherein the method comprises:
determining, by a second network element, that a first terminal is disassociated from a first terminal set, wherein the first terminal set comprises one or more terminals, and the one or more terminals access a first edge application server or a first data network access identifier; and
when the second network element determines that the first terminal is disassociated from the first terminal set, determining, by the second network element, a second edge application server corresponding to the first terminal, or sending, to a first network element, edge application server re-discovery-related indication information or edge application server relocation-related information.

14. The method according to claim 13, wherein the method further comprises:
determining, by the second network element, a second data network access identifier of the first terminal.

15. The method according to claim 14, wherein determining, by the second network element, the second data network access identifier of the first terminal comprises:
requesting, by the second network element, the second data network access identifier of the first terminal from the first network element; and
receiving, by the second network element, the second data network access identifier from the first network element.

16. The method according to claim 15, wherein requesting, by the second network element, the second data network access identifier of the first terminal from the first network element comprises:
sending, by the second network element, fifth indication information to the first network element, wherein the fifth indication information is used to request the second data network access identifier of the first terminal.

17. The method according to any one of claims 13 to 16, wherein after determining, by the second network element, the second edge application server corresponding to the first terminal, the method further comprises:
sending, by the second network element, edge application server address replacement information to the first network element, wherein the edge application server address replacement information is used by the first terminal to connect to the second edge application server.

18. A communication apparatus, wherein the apparatus comprises a communication module and a processing module, wherein
the processing module is configured to perform a processing action performed by the first network element in the communication method according to any one of claims 1 to 12, and the communication module is configured to perform a receiving or sending action performed by the first network element in the communication method according to any one of claims 1 to 12;
or
the processing module is configured to perform a processing action performed by the second network element in the communication method according to any one of claims 13 to 17, and the communication module is configured to perform a receiving or sending action performed by the second network element in the communication method according to any one of claims 13 to 17.

19. A communication system, wherein the system comprises a first network element and a target device, and the target device is a first terminal or a second network element; and
the first network element is configured to implement the communication method according to any one of claims 1 to 12, and the target device is configured to reselect an edge application server for the first terminal.

20. A communication system, wherein the system comprises a second network element and a first network element; and
the second network element is configured to implement the communication method according to any one of claims 13 to 17, and the first network element is configured to provide a second data network identifier for the second network element.

21. A chip, comprising at least one processor and a memory that is in communication connection with the at least one processor, wherein
the memory stores instructions executable by the at least one processor, and the instructions are executed by the at least one processor, to enable the at least one processor to perform the method according to any one of claims 1 to 12 or the method according to any one of claims 13 to 17.

22. A computer-readable storage medium, wherein the storage medium stores a computer program; and when the computer program is set to run, the method according to any one of claims 1 to 12 or the method according to any one of claims 13 to 17 is performed.
